# EUROPEAN PATENT APPLICATION

(11) **EP 3 703 028 A1**
(43) Date of publication of application: **02.09.2020**
(21) Application number: 20159974.3
(22) Date of filing: 28.02.2020
(51) Int. Cl.: G08G 1/087, G08G 1/0965, G08G 1/0967, G08G 1/0968, B60Q 1/50, B60Q 1/52, B60Q 5/00, B60W 60/00, G08G 1/16

(54) **OPERATION OF A VEHICLE IN THE EVENT OF AN EMERGENCY**

(30) Priority: 01.03.2019 US 201962812945 P
(71) Applicant: Aptiv Technologies Limited, 14004 St. Michael (BB)
(72) Inventor: MEIJBURG, Maria Antoinette, Boston, Massachusetts 02210 (US); SCHMITT, Paul, Merrimack, New Hampshire 03045 (US); DUINTJER TEBBENS, Radboud, Winchester, Massachusetts 01890 (US); CHANG, Hsun-Hsien, Brookline, Massachusetts 02445 (US)
(74) Representative: Conroy, John

(57) **Abstract**

Techniques are provided for operation of a vehicle in the event of an emergency. The techniques include receiving, using one or more sensors of a vehicle operating within an environment, sensor data representing an object located within the environment. The sensor data is used to identify whether the object is an emergency vehicle. Responsive to identifying that the object is an emergency vehicle, the sensor data is used to determine whether the emergency vehicle is operating in an emergency mode. Responsive to determining that the emergency vehicle is operating in the emergency mode, instructions representing an emergency operation for the vehicle are transmitted to a control module of the vehicle. The control module of the vehicle operates the vehicle in accordance with the emergency operation.

## Description

### CROSS-REFERENCE TO RELATED APPLICATION

This application claims the benefit of U.S. Provisional Application 62/812,945, filed on March 1, 2019.

### FIELD OF THE INVENTION

This description relates generally to operation of vehicles and specifically to operation of a vehicle in the event of an emergency.

### BACKGROUND

Operation of a vehicle from an initial location to a final destination often requires a user or the vehicle's decision-making system to select a route through a road network from the initial location to a final destination. However, the presence of emergency situations can require many decisions, making traditional algorithms for route selection impractical. Traditional greedy algorithms are sometimes used to select a route across a directed graph from the initial location to a final destination. However, in the presence of emergencies, the selected route may become overloaded and travel may slow to a crawl. In addition, the presence of parked vehicles, construction zones, and pedestrians complicate route selection and operation.

### SUMMARY

Techniques are provided for operation of a vehicle in the event of an emergency. The techniques include receiving, using one or more sensors of a vehicle operating within an environment, sensor data representing an object located within the environment. The sensor data is used to identify whether the object is an emergency vehicle. Responsive to identifying that the object is an emergency vehicle, the sensor data is used to determine whether the emergency vehicle is operating in an emergency mode. Responsive to determining that the emergency vehicle is operating in the emergency mode, instructions representing an emergency operation for the vehicle are transmitted to a control module of the vehicle. The control module of the vehicle operates the vehicle in accordance with the emergency operation.

In one embodiment, one or more processors of a vehicle operating in an environment are used to determine that an emergency vehicle is operating in an emergency mode in the environment. A spatiotemporal location of the vehicle is used to identify a safe location that is within a first threshold distance to the vehicle. A trajectory is generated for operating the vehicle from the spatiotemporal location to the safe location. A distance between the vehicle and the emergency vehicle is greater than a second threshold distance while operating the vehicle in accordance with the trajectory. A control module of the vehicle operates the vehicle in accordance with the trajectory.

In one embodiment, one or more processors of a vehicle receive one or more notifications that one or more emergency vehicles are operating in an emergency mode. The vehicle transmits, to at least one of the one or more emergency vehicles, a type of the vehicle. The vehicle receives, from the at least one of the one or more emergency vehicles, instructions to operate the vehicle. The instructions are further received by one or more other vehicles having a different type. The one or more processors are used to translate the received instructions to an emergency operation executable by the type of the vehicle. A control module of the vehicle operates the vehicle in accordance with the emergency operation.

In one embodiment, responsive to determining that an emergency vehicle is operating in an emergency mode, instructions representing an emergency operation for the vehicle are transmitted to a control module of a vehicle. One or more sensors of the vehicle are used to detect presence of one or more objects. The one or more sensors are used to determine that at least one object of the one or more objects is located within a threshold distance of the vehicle. A message indicating that the vehicle is operating in accordance with the emergency operation is displayed to the at least one object. The control module of the vehicle operates the vehicle in accordance with the emergency operation.

In one embodiment, a data platform includes one or more processors configured to receive, from each vehicle of one or more vehicles operating in an environment, information including a spatiotemporal location of the vehicle and an operating mode of the vehicle. A trajectory of the emergency vehicle is received from each emergency vehicle of one or more emergency vehicles operating in the environment. The spatiotemporal location of each vehicle of the one or more vehicles is used to determine rerouting information for the vehicle to avoid the trajectory of each emergency vehicle of the one or more emergency vehicles. The rerouting information is transmitted to the each vehicle of the one or more vehicles.

In one embodiment, one or more sensors of a vehicle are used to receive sensor data. The sensor data is used to determine whether an emergency involving the vehicle has occurred. Responsive to determining that the emergency has occurred, the sensor data is used to identify a type of the emergency. The type of the emergency is used to retrieve an emergency operation to be performed by the vehicle. A control module of the vehicle operates the vehicle in accordance with the emergency operation.

These and other aspects, features, and implementations can be expressed as methods, apparatus, systems, components, program products, means or steps for performing a function, and in other ways.

These and other aspects, features, and implementations will become apparent from the following descriptions, including the claims.

### BRIEF DESCRIPTION OF THE DRAWINGS

FIG. 1 shows an example of an autonomous vehicle (AV) having autonomous capability, in accordance with one or more embodiments.
FIG. 2 illustrates an example "cloud" computing environment, in accordance with one or more embodiments.
FIG. 3 illustrates a computer system, in accordance with one or more embodiments.
FIG. 4 shows an example architecture for an AV, in accordance with one or more embodiments.
FIG. 5 shows an example of inputs and outputs that may be used by a perception module, in accordance with one or more embodiments.
FIG. 6 shows an example of a LiDAR system, in accordance with one or more embodiments.
FIG. 7 shows the LiDAR system in operation, in accordance with one or more embodiments.
FIG. 8 shows the operation of the LiDAR system in additional detail, in accordance with one or more embodiments.
FIG. 9 shows a block diagram of the relationships between inputs and outputs of a planning module, in accordance with one or more embodiments.
FIG. 10 shows a directed graph used in path planning, in accordance with one or more embodiments.
FIG. 11 shows a block diagram of the inputs and outputs of a control module, in accordance with one or more embodiments.
FIG. 12 shows a block diagram of the inputs, outputs, and components of a controller, in accordance with one or more embodiments.
FIG. 13 illustrates a block diagram of an operating environment for operation of a vehicle in the event of an emergency, in accordance with one or more embodiments.
FIG. 14 illustrates an example of operation of a vehicle in the event of an emergency, in accordance with one or more embodiments.
FIG. 15 illustrates a machine learning process for operation of a vehicle in the event of an emergency, in accordance with one or more embodiments.
FIGS. 16-21 illustrates processes for operation of a vehicle in the event of an emergency, in accordance with one or more embodiments.

### DETAILED DESCRIPTION

In the following description, for the purposes of explanation, numerous specific details are set forth in order to provide a thorough understanding of the present invention. It will be apparent, however, that the present invention may be practiced without these specific details. In other instances, well-known structures and devices are shown in block diagram form in order to avoid unnecessarily obscuring the present invention.

In the drawings, specific arrangements or orderings of schematic elements, such as those representing devices, modules, instruction blocks and data elements, are shown for ease of description. However, it should be understood by those skilled in the art that the specific ordering or arrangement of the schematic elements in the drawings is not meant to imply that a particular order or sequence of processing, or separation of processes, is required. Further, the inclusion of a schematic element in a drawing is not meant to imply that such element is required in all embodiments or that the features represented by such element may not be included in or combined with other elements in some embodiments.

Further, in the drawings, where connecting elements, such as solid or dashed lines or arrows, are used to illustrate a connection, relationship, or association between or among two or more other schematic elements, the absence of any such connecting elements is not meant to imply that no connection, relationship, or association can exist. In other words, some connections, relationships, or associations between elements are not shown in the drawings so as not to obscure the disclosure. In addition, for ease of illustration, a single connecting element is used to represent multiple connections, relationships or associations between elements. For example, where a connecting element represents a communication of signals, data, or instructions, it should be understood by those skilled in the art that such element represents one or multiple signal paths (e.g., a bus), as may be needed, to affect the communication.

Reference will now be made in detail to embodiments, examples of which are illustrated in the accompanying drawings. In the following detailed description, numerous specific details are set forth in order to provide a thorough understanding of the various described embodiments. However, it will be apparent to one of ordinary skill in the art that the various described embodiments may be practiced without these specific details. In other instances, well-known methods, procedures, components, circuits, and networks have not been described in detail so as not to unnecessarily obscure aspects of the embodiments.

Several features are described hereafter that can each be used independently of one another or with any combination of other features. However, any individual feature may not address any of the problems discussed above or might only address one of the problems discussed above. Some of the problems discussed above might not be fully addressed by any of the features described herein. Although headings are provided, information related to a particular heading, but not found in the section having that heading, may also be found elsewhere in this description. Embodiments are described herein according to the following outline:
1. General Overview
2. System Overview
3. Autonomous Vehicle Architecture
4. Autonomous Vehicle Inputs
5. Autonomous Vehicle Planning
6. Autonomous Vehicle Control
7. Architecture for Operation of a Vehicle in the Event of an Emergency
8. Example of Operation of a Vehicle in the Event of an Emergency
9. Machine Learning Process for Operation of a Vehicle in an Emergency
10. Process for Operation of a Vehicle in the Event of an Emergency

### General Overview

An autonomous vehicle (AV) uses sensors to detect objects and determine distances from objects during operation within an operating environment. The sensors include visual sensors such as cameras and LiDARs. A LiDAR is a remote sensing device that uses a grid of pulsed laser beams to measure a distance from an object to the device. To operate the AV, the visual sensors of the AV are used to receive sensor data representing the operating environment. One or more processors of the AV are used to identify an object located within the operating environment, such as a pedestrian, another vehicle, or a construction zone, etc. The one or more processors are used to determine that the AV is likely to collide with the object, where the likelihood is greater than a threshold.

In some embodiments, an AV uses visual sensors or audio sensors to receive images, RF signals, codes embedded in high-frequency sound waves, or messages from an emergency vehicle to detect whether an emergency vehicle is operating in an emergency mode. The AV thus receives sensor data representing an object located in an environment. For example, the sensor data may be two-dimensional (2D) or three-dimensional (3D) LiDAR data or audio data. The AV classifies the object as an emergency vehicle. The AV thus identifies, using the sensor data, whether the object is an emergency vehicle.

Responsive to identifying that the object is an emergency vehicle, the AV determines, using the sensor data, whether the emergency vehicle is operating in an emergency mode. The emergency mode is described as a mode in which the emergency vehicle provides audiovisual or other types of signals to surrounding vehicles to indicate that it is responding to an emergency, such as a medical emergency, a disaster-relief situation, etc. The surrounding vehicles are to give way to the emergency vehicle or allow the emergency vehicle to pass. The emergency mode may also be described as a mode of operation of the emergency vehicle in which, under the law (e.g., road rules, city regulations, etc.,), surrounding vehicles are required to give way to emergency vehicles.

Responsive to determining that the emergency vehicle is operating in the emergency mode, the AV transmits, to a control module of the AV, instructions representing an emergency operation for the vehicle. For example, the instructions may instruct the AV to pull over, stop, continue driving at a certain speed, or transmit a message to the emergency vehicle. The control module of the AV operates the AV in accordance with the emergency operation. The sensors of the AV thus capture sensor data representing a structure of an object and transform the sensor data into physical operations for the AV. The physical operations may increase lateral clearance for the emergency vehicle to attend to an emergency. The embodiments disclosed herein reduce the time for maneuvering by the AV and the emergency vehicle, and reduce the response time for the emergency vehicle.

### System Overview

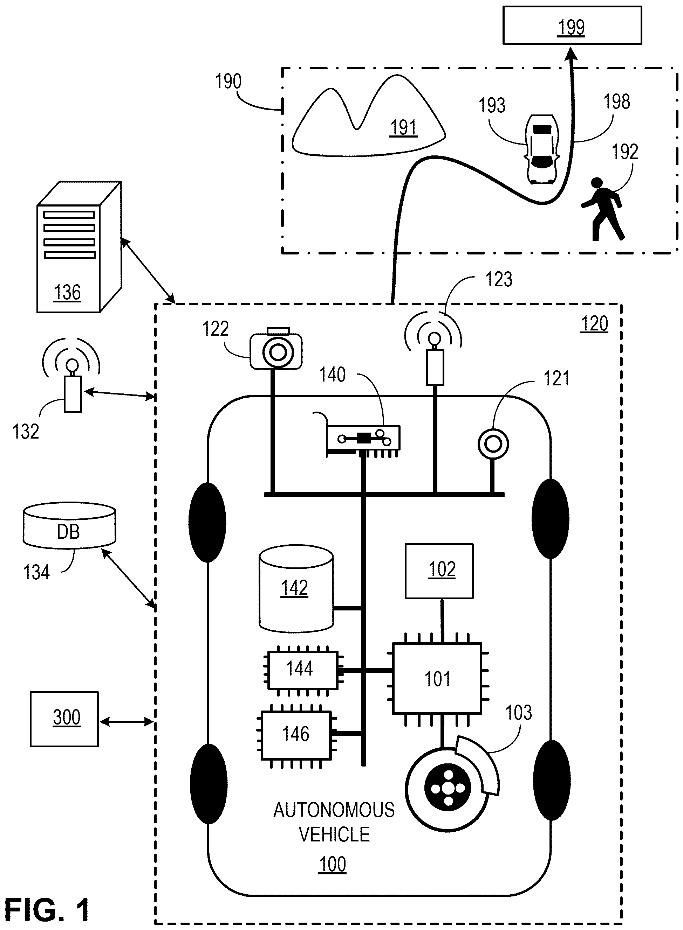

FIG. 1 shows an example of an autonomous vehicle 100 having autonomous capability.

As used herein, the term "autonomous capability" refers to a function, feature, or facility that enables a vehicle to be partially or fully operated without real-time human intervention, including without limitation fully autonomous vehicles, highly autonomous vehicles, and conditionally autonomous vehicles.

As used herein, an autonomous vehicle (AV) is a vehicle that possesses autonomous capability.

As used herein, "vehicle" includes means of transportation of goods or people. For example, cars, buses, trains, airplanes, drones, trucks, boats, ships, submersibles, dirigibles, etc. A driverless car is an example of a vehicle.

As used herein, "trajectory" refers to a path or route to operate an AV from a first spatiotemporal location to second spatiotemporal location. In an embodiment, the first spatiotemporal location is referred to as the initial or starting location and the second spatiotemporal location is referred to as the destination, final location, goal, goal position, or goal location. In some examples, a trajectory is made up of one or more segments (e.g., sections of road) and each segment is made up of one or more blocks (e.g., portions of a lane or intersection). In an embodiment, the spatiotemporal locations correspond to real world locations. For example, the spatiotemporal locations are pick up or drop-off locations to pick up or drop-off persons or goods.

As used herein, "sensor(s)" includes one or more hardware components that detect information about the environment surrounding the sensor. Some of the hardware components can include sensing components (e.g., image sensors, biometric sensors), transmitting and/or receiving components (e.g., laser or radio frequency wave transmitters and receivers), electronic components such as analog-to-digital converters, a data storage device (such as a RAM and/or a nonvolatile storage), software or firmware components and data processing components such as an ASIC (application-specific integrated circuit), a microprocessor and/or a microcontroller.

As used herein, a "scene description" is a data structure (e.g., list) or data stream that includes one or more classified or labeled objects detected by one or more sensors on the AV vehicle or provided by a source external to the AV.

As used herein, a "road" is a physical area that can be traversed by a vehicle, and may correspond to a named thoroughfare (e.g., city street, interstate freeway, etc.) or may correspond to an unnamed thoroughfare (e.g., a driveway in a house or office building, a section of a parking lot, a section of a vacant lot, a dirt path in a rural area, etc.). Because some vehicles (e.g., 4-wheel-drive pickup trucks, sport utility vehicles, etc.) are capable of traversing a variety of physical areas not specifically adapted for vehicle travel, a "road" may be a physical area not formally defined as a thoroughfare by any municipality or other governmental or administrative body.

As used herein, a "lane" is a portion of a road that can be traversed by a vehicle and may correspond to most or all of the space between lane markings, or may correspond to only some (e.g., less than 50%) of the space between lane markings. For example, a road having lane markings spaced far apart might accommodate two or more vehicles between the markings, such that one vehicle can pass the other without traversing the lane markings, and thus could be interpreted as having a lane narrower than the space between the lane markings or having two lanes between the lane markings. A lane could also be interpreted in the absence of lane markings. For example, a lane may be defined based on physical features of an environment, e.g., rocks and trees along a thoroughfare in a rural area.

"One or more" includes a function being performed by one element, a function being performed by more than one element, e.g., in a distributed fashion, several functions being performed by one element, several functions being performed by several elements, or any combination of the above.

It will also be understood that, although the terms first, second, etc. are, in some instances, used herein to describe various elements, these elements should not be limited by these terms. These terms are only used to distinguish one element from another. For example, a first contact could be termed a second contact, and, similarly, a second contact could be termed a first contact, without departing from the scope of the various described embodiments. The first contact and the second contact are both contacts, but they are not the same contact.

The terminology used in the description of the various described embodiments herein is for the purpose of describing particular embodiments only and is not intended to be limiting. As used in the description of the various described embodiments and the appended claims, the singular forms "a," "an" and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "includes," and/or "including," when used in this description, specify the presence of stated features, integers, steps, operations, elements, and/or components, but do not preclude the presence or addition of one or more other features, integers, steps, operations, elements, components, and/or groups thereof.

As used herein, the term "if" is, optionally, construed to mean "when" or "upon" or "in response to determining" or "in response to detecting," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]," depending on the context.

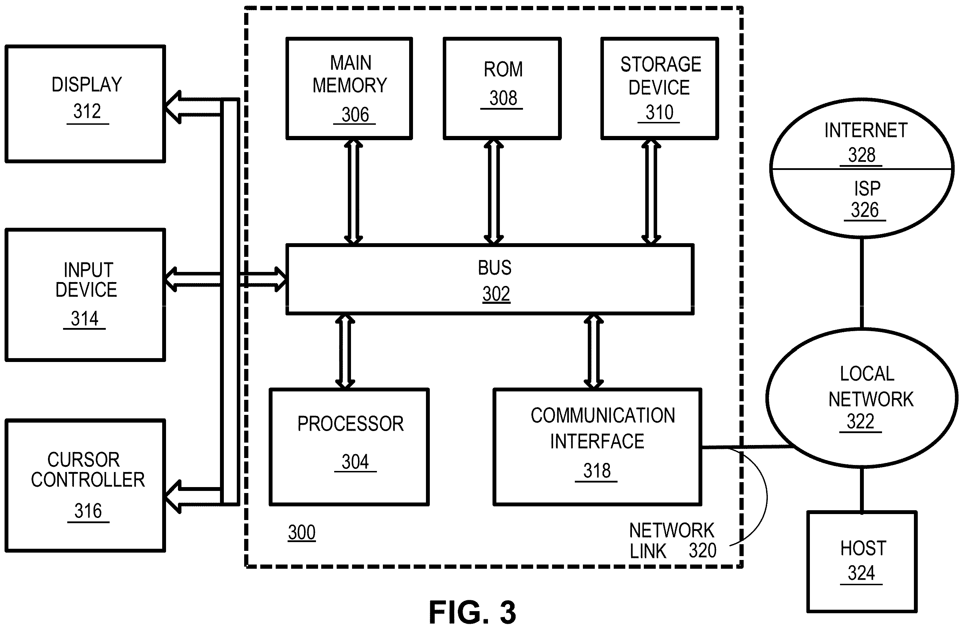

As used herein, an AV system refers to the AV along with the array of hardware, software, stored data, and data generated in real-time that supports the operation of the AV. In an embodiment, the AV system is incorporated within the AV. In an embodiment, the AV system is spread across several locations. For example, some of the software of the AV system is implemented on a cloud computing environment similar to cloud computing environment 300 described below with respect to FIG. 3.

In general, this document describes technologies applicable to any vehicles that have one or more autonomous capabilities including fully autonomous vehicles, highly autonomous vehicles, and conditionally autonomous vehicles, such as so-called Level 5, Level 4 and Level 3 vehicles, respectively (see SAE International's standard J3016: Taxonomy and Definitions for Terms Related to On-Road Motor Vehicle Automated Driving Systems, which is incorporated by reference in its entirety, for more details on the classification of levels of autonomy in vehicles). The technologies described in this document are also applicable to partially autonomous vehicles and driver assisted vehicles, such as so-called Level 2 and Level 1 vehicles (see SAE International's standard J3016: Taxonomy and Definitions for Terms Related to On-Road Motor Vehicle Automated Driving Systems). In an embodiment, one or more of the Level 1, 2, 3, 4 and 5 vehicle systems may automate certain vehicle operations (e.g., steering, braking, and using maps) under certain operating conditions based on processing of sensor inputs. The technologies described in this document can benefit vehicles in any levels, ranging from fully autonomous vehicles to human-operated vehicles.

Referring to FIG. 1, an AV system 120 operates the AV 100 along a trajectory 198 through an environment 190 to a destination 199 (sometimes referred to as a final location) while avoiding objects (e.g., natural obstructions 191, vehicles 193, pedestrians 192, cyclists, and other obstacles) and obeying rules of the road (e.g., rules of operation or driving preferences).

In an embodiment, the AV system 120 includes devices 101 that are instrumented to receive and act on operational commands from the computer processors 146. In an embodiment, computing processors 146 are similar to the processor 304 described below in reference to FIG. 3. Examples of devices 101 include a steering control 102, brakes 103, gears, accelerator pedal or other acceleration control mechanisms, windshield wipers, side-door locks, window controls, and turn-indicators.

In an embodiment, the AV system 120 includes sensors 121 for measuring or inferring properties of state or condition of the AV 100, such as the AV's position, linear velocity and acceleration, angular velocity and acceleration, and heading (e.g., an orientation of the leading end of AV 100). Example of sensors 121 are GNSS, inertial measurement units (IMU) that measure both vehicle linear accelerations and angular rates, wheel speed sensors for measuring or estimating wheel slip ratios, wheel brake pressure or braking torque sensors, engine torque or wheel torque sensors, and steering angle and angular rate sensors.

In an embodiment, the sensors 121 also include sensors for sensing or measuring properties of the AV's environment. For example, monocular or stereo video cameras 122 in the visible light, infrared or thermal (or both) spectra, LiDAR 123, RADAR, ultrasonic sensors, time-of-flight (TOF) depth sensors, speed sensors, temperature sensors, humidity sensors, and precipitation sensors.

In an embodiment, the AV system 120 includes a data storage unit 142 and memory 144 for storing machine instructions associated with computer processors 146 or data collected by sensors 121. In an embodiment, the data storage unit 142 is similar to the ROM 308 or storage device 310 described below in relation to FIG. 3. In an embodiment, memory 144 is similar to the main memory 306 described below. In an embodiment, the data storage unit 142 and memory 144 store historical, real-time, and/or predictive information about the environment 190. In an embodiment, the stored information includes maps, driving performance, traffic congestion updates or weather conditions. In an embodiment, data relating to the environment 190 is transmitted to the AV 100 via a communications channel from a remotely located database 134.

In an embodiment, the AV system 120 includes communications devices 140 for communicating measured or inferred properties of other vehicles' states and conditions, such as positions, linear and angular velocities, linear and angular accelerations, and linear and angular headings to the AV 100. These devices include Vehicle-to-Vehicle (V2V) and Vehicle-to-Infrastructure (V2I) communication devices and devices for wireless communications over point-to-point or ad hoc networks or both. In an embodiment, the communications devices 140 communicate across the electromagnetic spectrum (including radio and optical communications) or other media (e.g., air and acoustic media). A combination of Vehicle-to-Vehicle (V2V) Vehicle-to-Infrastructure (V2I) communication (and, in some embodiments, one or more other types of communication) is sometimes referred to as Vehicle-to-Everything (V2X) communication. V2X communication typically conforms to one or more communications standards for communication with, between, and among autonomous vehicles.

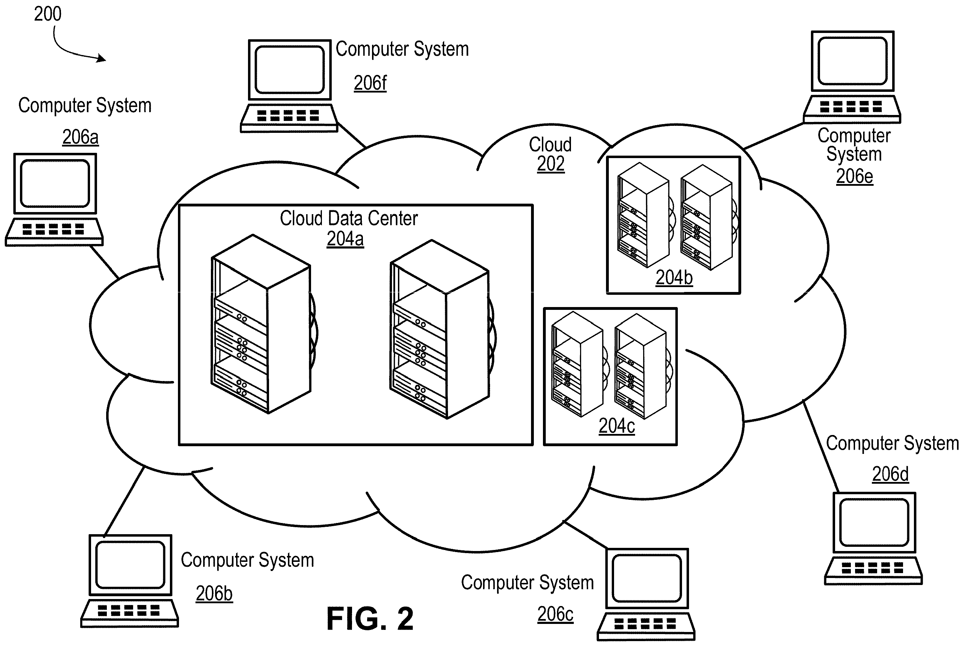

In an embodiment, the communication devices 140 include communication interfaces. For example, wired, wireless, WiMAX, Wi-Fi, Bluetooth, satellite, cellular, optical, near field, infrared, or radio interfaces. The communication interfaces transmit data from a remotely located database 134 to AV system 120. In an embodiment, the remotely located database 134 is embedded in a cloud computing environment 200 as described in FIG. 2. The communication interfaces 140 transmit data collected from sensors 121 or other data related to the operation of AV 100 to the remotely located database 134. In an embodiment, communication interfaces 140 transmit information that relates to teleoperations to the AV 100. In some embodiments, the AV 100 communicates with other remote (e.g., "cloud") servers 136.

In an embodiment, the remotely located database 134 also stores and transmits digital data (e.g., storing data such as road and street locations). Such data is stored on the memory 144 on the AV 100, or transmitted to the AV 100 via a communications channel from the remotely located database 134.

In an embodiment, the remotely located database 134 stores and transmits historical information about driving properties (e.g., speed and acceleration profiles) of vehicles that have previously traveled along trajectory 198 at similar times of day. In one implementation, such data may be stored on the memory 144 on the AV 100, or transmitted to the AV 100 via a communications channel from the remotely located database 134.

Computing devices 146 located on the AV 100 algorithmically generate control actions based on both real-time sensor data and prior information, allowing the AV system 120 to execute its autonomous driving capabilities.

In an embodiment, the AV system 120 includes computer peripherals 132 coupled to computing devices 146 for providing information and alerts to, and receiving input from, a user (e.g., an occupant or a remote user) of the AV 100. In an embodiment, peripherals 132 are similar to the display 312, input device 314, and cursor controller 316 discussed below in reference to FIG. 3. The coupling is wireless or wired. Any two or more of the interface devices may be integrated into a single device.

### Example Cloud Computing Environment

FIG. 2 illustrates an example "cloud" computing environment. Cloud computing is a model of service delivery for enabling convenient, on-demand network access to a shared pool of configurable computing resources (e.g. networks, network bandwidth, servers, processing, memory, storage, applications, virtual machines, and services). In typical cloud computing systems, one or more large cloud data centers house the machines used to deliver the services provided by the cloud. Referring now to FIG. 2, the cloud computing environment 200 includes cloud data centers 204a, 204b, and 204c that are interconnected through the cloud 202. Data centers 204a, 204b, and 204c provide cloud computing services to computer systems 206a, 206b, 206c, 206d, 206e, and 206f connected to cloud 202.

The cloud computing environment 200 includes one or more cloud data centers. In general, a cloud data center, for example the cloud data center 204a shown in FIG. 2, refers to the physical arrangement of servers that make up a cloud, for example the cloud 202 shown in FIG. 2, or a particular portion of a cloud. For example, servers are physically arranged in the cloud datacenter into rooms, groups, rows, and racks. A cloud datacenter has one or more zones, which include one or more rooms of servers. Each room has one or more rows of servers, and each row includes one or more racks. Each rack includes one or more individual server nodes. In some implementation, servers in zones, rooms, racks, and/or rows are arranged into groups based on physical infrastructure requirements of the datacenter facility, which include power, energy, thermal, heat, and/or other requirements. In an embodiment, the server nodes are similar to the computer system described in FIG. 3. The data center 204a has many computing systems distributed through many racks.

The cloud 202 includes cloud data centers 204a, 204b, and 204c along with the network and networking resources (for example, networking equipment, nodes, routers, switches, and networking cables) that interconnect the cloud data centers 204a, 204b, and 204c and help facilitate the computing systems' 206a-f access to cloud computing services. In an embodiment, the network represents any combination of one or more local networks, wide area networks, or internetworks coupled using wired or wireless links deployed using terrestrial or satellite connections. Data exchanged over the network, is transferred using any number of network layer protocols, such as Internet Protocol (IP), Multiprotocol Label Switching (MPLS), Asynchronous Transfer Mode (ATM), Frame Relay, etc. Furthermore, in embodiments where the network represents a combination of multiple sub-networks, different network layer protocols are used at each of the underlying sub-networks. In some embodiments, the network represents one or more interconnected internetworks, such as the public Internet.

The computing systems 206a-f or cloud computing services consumers are connected to the cloud 202 through network links and network adapters. In an embodiment, the computing systems 206a-f are implemented as various computing devices, for example servers, desktops, laptops, tablet, smartphones, Internet of Things (IoT) devices, autonomous vehicles (including, cars, drones, shuttles, trains, buses, etc.) and consumer electronics. In an embodiment, the computing systems 206a-f are implemented in or as a part of other systems.

### Computer System

FIG. 3 illustrates a computer system 300. In an implementation, the computer system 300 is a special purpose computing device. The special-purpose computing device is hard-wired to perform the techniques or includes digital electronic devices such as one or more application-specific integrated circuits (ASICs) or field programmable gate arrays (FPGAs) that are persistently programmed to perform the techniques or may include one or more general purpose hardware processors programmed to perform the techniques pursuant to program instructions in firmware, memory, other storage, or a combination. Such special-purpose computing devices may also combine custom hard-wired logic, ASICs, or FPGAs with custom programming to accomplish the techniques. In various embodiments, the special-purpose computing devices are desktop computer systems, portable computer systems, handheld devices, network devices or any other device that incorporates hard-wired and/or program logic to implement the techniques.

In an embodiment, the computer system 300 includes a bus 302 or other communication mechanism for communicating information, and a hardware processor 304 coupled with a bus 302 for processing information. The hardware processor 304 is, for example, a general-purpose microprocessor. The computer system 300 also includes a main memory 306, such as a random-access memory (RAM) or other dynamic storage device, coupled to the bus 302 for storing information and instructions to be executed by processor 304. In one implementation, the main memory 306 is used for storing temporary variables or other intermediate information during execution of instructions to be executed by the processor 304. Such instructions, when stored in non-transitory storage media accessible to the processor 304, render the computer system 300 into a special-purpose machine that is customized to perform the operations specified in the instructions.

In an embodiment, the computer system 300 further includes a read only memory (ROM) 308 or other static storage device coupled to the bus 302 for storing static information and instructions for the processor 304. A storage device 310, such as a magnetic disk, optical disk, solid-state drive, or three-dimensional cross point memory is provided and coupled to the bus 302 for storing information and instructions.

In an embodiment, the computer system 300 is coupled via the bus 302 to a display 312, such as a cathode ray tube (CRT), a liquid crystal display (LCD), plasma display, light emitting diode (LED) display, or an organic light emitting diode (OLED) display for displaying information to a computer user. An input device 314, including alphanumeric and other keys, is coupled to bus 302 for communicating information and command selections to the processor 304. Another type of user input device is a cursor controller 316, such as a mouse, a trackball, a touch-enabled display, or cursor direction keys for communicating direction information and command selections to the processor 304 and for controlling cursor movement on the display 312. This input device typically has two degrees of freedom in two axes, a first axis (e.g., x-axis) and a second axis (e.g., y-axis), that allows the device to specify positions in a plane.

According to one embodiment, the techniques herein are performed by the computer system 300 in response to the processor 304 executing one or more sequences of one or more instructions contained in the main memory 306. Such instructions are read into the main memory 306 from another storage medium, such as the storage device 310. Execution of the sequences of instructions contained in the main memory 306 causes the processor 304 to perform the process steps described herein. In alternative embodiments, hard-wired circuitry is used in place of or in combination with software instructions.

The term "storage media" as used herein refers to any non-transitory media that store data and/or instructions that cause a machine to operate in a specific fashion. Such storage media includes non-volatile media and/or volatile media. Non-volatile media includes, for example, optical disks, magnetic disks, solid-state drives, or three-dimensional cross point memory, such as the storage device 310. Volatile media includes dynamic memory, such as the main memory 306. Common forms of storage media include, for example, a floppy disk, a flexible disk, hard disk, solid-state drive, magnetic tape, or any other magnetic data storage medium, a CD-ROM, any other optical data storage medium, any physical medium with patterns of holes, a RAM, a PROM, and EPROM, a FLASH-EPROM, NV-RAM, or any other memory chip or cartridge.

Storage media is distinct from but may be used in conjunction with transmission media. Transmission media participates in transferring information between storage media. For example, transmission media includes coaxial cables, copper wire and fiber optics, including the wires that include the bus 302. Transmission media can also take the form of acoustic or light waves, such as those generated during radio-wave and infrared data communications.

In an embodiment, various forms of media are involved in carrying one or more sequences of one or more instructions to the processor 304 for execution. For example, the instructions are initially carried on a magnetic disk or solid-state drive of a remote computer. The remote computer loads the instructions into its dynamic memory and send the instructions over a telephone line using a modem. A modem local to the computer system 300 receives the data on the telephone line and use an infrared transmitter to convert the data to an infrared signal. An infrared detector receives the data carried in the infrared signal and appropriate circuitry places the data on the bus 302. The bus 302 carries the data to the main memory 306, from which processor 304 retrieves and executes the instructions. The instructions received by the main memory 306 may optionally be stored on the storage device 310 either before or after execution by processor 304.

The computer system 300 also includes a communication interface 318 coupled to the bus 302. The communication interface 318 provides a two-way data communication coupling to a network link 320 that is connected to a local network 322. For example, the communication interface 318 is an integrated service digital network (ISDN) card, cable modem, satellite modem, or a modem to provide a data communication connection to a corresponding type of telephone line. As another example, the communication interface 318 is a local area network (LAN) card to provide a data communication connection to a compatible LAN. In some implementations, wireless links are also implemented. In any such implementation, the communication interface 318 sends and receives electrical, electromagnetic, or optical signals that carry digital data streams representing various types of information.

The network link 320 typically provides data communication through one or more networks to other data devices. For example, the network link 320 provides a connection through the local network 322 to a host computer 324 or to a cloud data center or equipment operated by an Internet Service Provider (ISP) 326. The ISP 326 in turn provides data communication services through the world-wide packet data communication network now commonly referred to as the "Internet" 328. The local network 322 and Internet 328 both use electrical, electromagnetic, or optical signals that carry digital data streams. The signals through the various networks and the signals on the network link 320 and through the communication interface 318, which carry the digital data to and from the computer system 300, are example forms of transmission media. In an embodiment, the network 320 contains the cloud 202 or a part of the cloud 202 described above.

The computer system 300 sends messages and receives data, including program code, through the network(s), the network link 320, and the communication interface 318. In an embodiment, the computer system 300 receives code for processing. The received code is executed by the processor 304 as it is received, and/or stored in storage device 310, or other non-volatile storage for later execution.

### Autonomous Vehicle Architecture

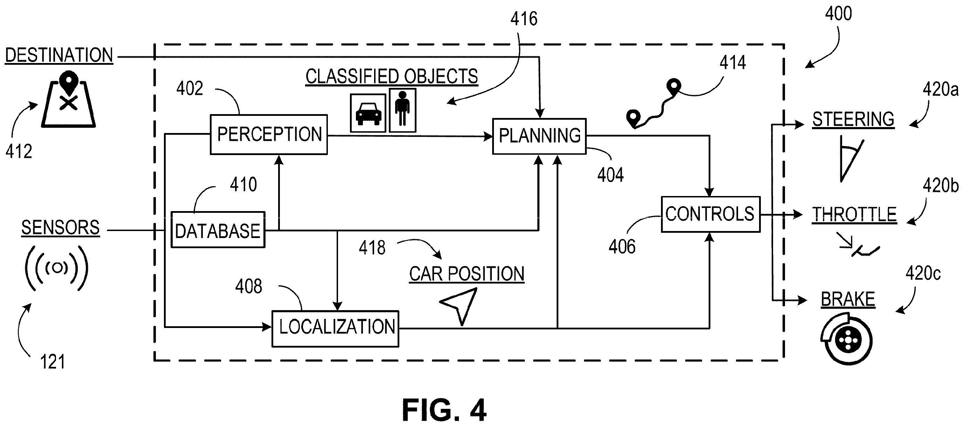

FIG. 4 shows an example architecture 400 for an autonomous vehicle (e.g., the AV 100 shown in FIG. 1). The architecture 400 includes a perception module 402 (sometimes referred to as a perception circuit), a planning module 404 (sometimes referred to as a planning circuit), a control module 406 (sometimes referred to as a control circuit), a localization module 408 (sometimes referred to as a localization circuit), and a database module 410 (sometimes referred to as a database circuit). Each module plays a role in the operation of the AV 100. Together, the modules 402, 404, 406, 408, and 410 may be part of the AV system 120 shown in FIG. 1. In some embodiments, any of the modules 402, 404, 406, 408, and 410 is a combination of computer software (e.g., executable code stored on a computer-readable medium) and computer hardware (e.g., one or more microprocessors, microcontrollers, application-specific integrated circuits [ASICs]), hardware memory devices, other types of integrated circuits, other types of computer hardware, or a combination of any or all of these things).

In use, the planning module 404 receives data representing a destination 412 and determines data representing a trajectory 414 (sometimes referred to as a route) that can be traveled by the AV 100 to reach (e.g., arrive at) the destination 412. In order for the planning module 404 to determine the data representing the trajectory 414, the planning module 404 receives data from the perception module 402, the localization module 408, and the database module 410.

The perception module 402 identifies nearby physical objects using one or more sensors 121, e.g., as also shown in FIG. 1. The objects are classified (e.g., grouped into types such as pedestrian, bicycle, automobile, traffic sign, etc.) and a scene description including the classified objects 416 is provided to the planning module 404.

The planning module 404 also receives data representing the AV position 418 from the localization module 408. The localization module 408 determines the AV position by using data from the sensors 121 and data from the database module 410 (e.g., a geographic data) to calculate a position. For example, the localization module 408 uses data from a GNSS (Global Operation Satellite System) sensor and geographic data to calculate a longitude and latitude of the AV. In an embodiment, data used by the localization module 408 includes high-precision maps of the roadway geometric properties, maps describing road network connectivity properties, maps describing roadway physical properties (such as traffic speed, traffic volume, the number of vehicular and cyclist traffic lanes, lane width, lane traffic directions, or lane marker types and locations, or combinations of them), and maps describing the spatial locations of road features such as crosswalks, traffic signs or other travel signals of various types.

The control module 406 receives the data representing the trajectory 414 and the data representing the AV position 418 and operates the control functions 420a-c (e.g., steering, throttling, braking, ignition) of the AV in a manner that will cause the AV 100 to travel the trajectory 414 to the destination 412. For example, if the trajectory 414 includes a left turn, the control module 406 will operate the control functions 420a-c in a manner such that the steering angle of the steering function will cause the AV 100 to turn left and the throttling and braking will cause the AV 100 to pause and wait for passing pedestrians or vehicles before the turn is made.

### Autonomous Vehicle Inputs

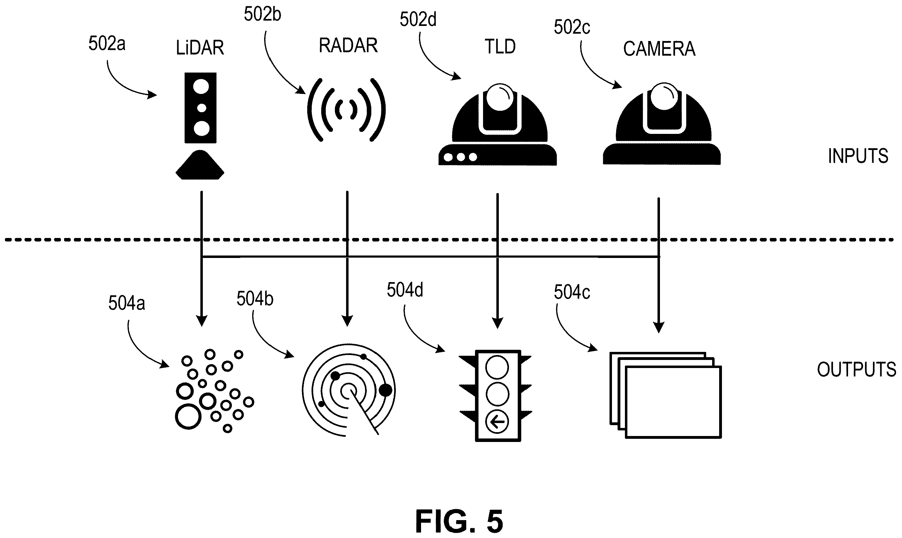

FIG. 5 shows an example of inputs 502a-d (e.g., sensors 121 shown in FIG. 1) and outputs 504a-d (e.g., sensor data) that is used by the perception module 402 (FIG. 4). One input 502a is a LiDAR (Light Detection and Ranging) system (e.g., LiDAR 123 shown in FIG. 1). LiDAR is a technology that uses light (e.g., bursts of light such as infrared light) to obtain data about physical objects in its line of sight. A LiDAR system produces LiDAR data as output 504a. For example, LiDAR data is collections of 3D or 2D points (also known as a point clouds) that are used to construct a representation of the environment 190.

Another input 502b is a RADAR system. RADAR is a technology that uses radio waves to obtain data about nearby physical objects. RADARs can obtain data about objects not within the line of sight of a LiDAR system. A RADAR system 502b produces RADAR data as output 504b. For example, RADAR data are one or more radio frequency electromagnetic signals that are used to construct a representation of the environment 190.

Another input 502c is a camera system. A camera system uses one or more cameras (e.g., digital cameras using a light sensor such as a charge-coupled device [CCD]) to obtain information about nearby physical objects. A camera system produces camera data as output 504c. Camera data often takes the form of image data (e.g., data in an image data format such as RAW, JPEG, PNG, etc.). In some examples, the camera system has multiple independent cameras, e.g., for the purpose of stereopsis (stereo vision), which enables the camera system to perceive depth. Although the objects perceived by the camera system are described here as "nearby," this is relative to the AV. In use, the camera system may be configured to "see" objects far, e.g., up to a kilometer or more ahead of the AV. Accordingly, the camera system may have features such as sensors and lenses that are optimized for perceiving objects that are far away.

Another input 502d is a traffic light detection (TLD) system. A TLD system uses one or more cameras to obtain information about traffic lights, street signs, and other physical objects that provide visual operation information. A TLD system produces TLD data as output 504d. TLD data often takes the form of image data (e.g., data in an image data format such as RAW, JPEG, PNG, etc.). A TLD system differs from a system incorporating a camera in that a TLD system uses a camera with a wide field of view (e.g., using a wide-angle lens or a fish-eye lens) in order to obtain information about as many physical objects providing visual operation information as possible, so that the AV 100 has access to all relevant operation information provided by these objects. For example, the viewing angle of the TLD system may be about 120 degrees or more.

In some embodiments, outputs 504a-d are combined using a sensor fusion technique. Thus, either the individual outputs 504a-d are provided to other systems of the AV 100 (e.g., provided to a planning module 404 as shown in FIG. 4), or the combined output can be provided to the other systems, either in the form of a single combined output or multiple combined outputs of the same type (e.g., using the same combination technique or combining the same outputs or both) or different types type (e.g., using different respective combination techniques or combining different respective outputs or both). In some embodiments, an early fusion technique is used. An early fusion technique is characterized by combining outputs before one or more data processing steps are applied to the combined output. In some embodiments, a late fusion technique is used. A late fusion technique is characterized by combining outputs after one or more data processing steps are applied to the individual outputs.

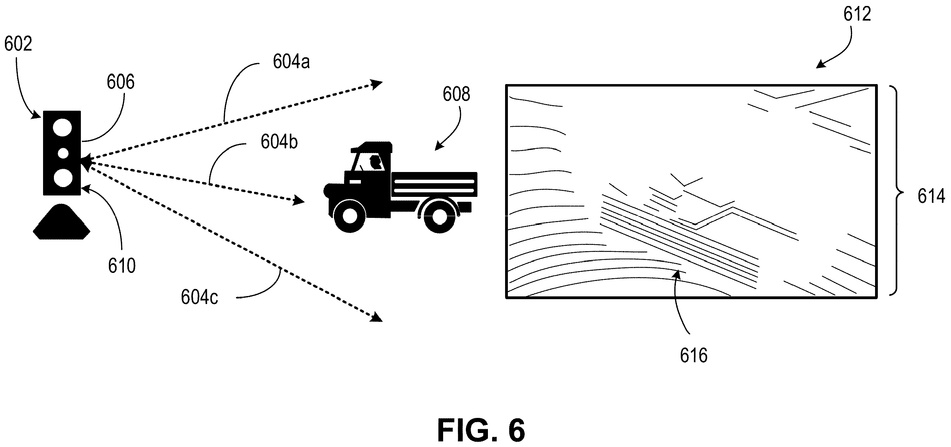

FIG. 6 shows an example of a LiDAR system 602 (e.g., the input 502a shown in FIG. 5). The LiDAR system 602 emits light 604a-c from a light emitter 606 (e.g., a laser transmitter). Light emitted by a LiDAR system is typically not in the visible spectrum; for example, infrared light is often used. Some of the light 604b emitted encounters a physical object 608 (e.g., a vehicle) and reflects back to the LiDAR system 602. (Light emitted from a LiDAR system typically does not penetrate physical objects, e.g., physical objects in solid form.) The LiDAR system 602 also has one or more light detectors 610, which detect the reflected light. In an embodiment, one or more data processing systems associated with the LiDAR system generates an image 612 representing the field of view 614 of the LiDAR system. The image 612 includes information that represents the boundaries 616 of a physical object 608. In this way, the image 612 is used to determine the boundaries 616 of one or more physical objects near an AV.

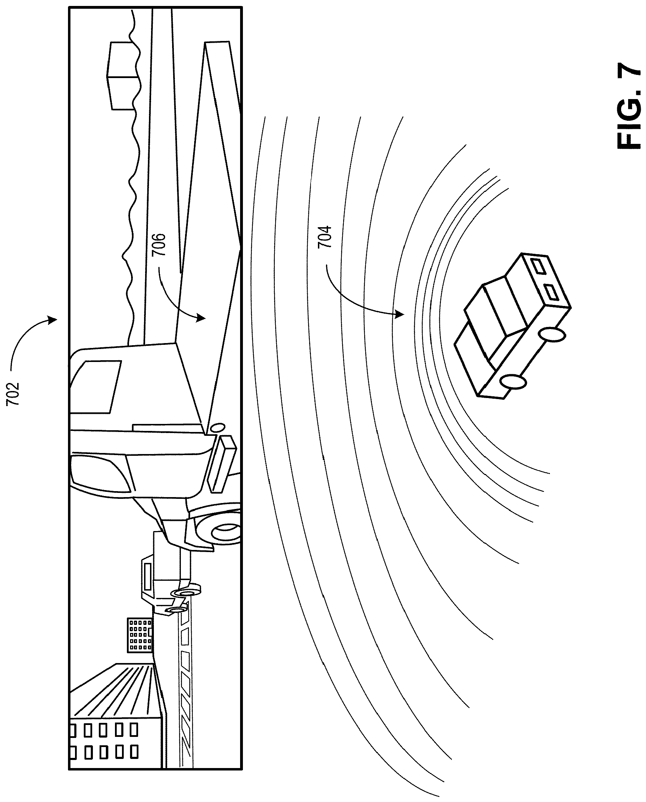

FIG. 7 shows the LiDAR system 602 in operation. In the scenario shown in this figure, the AV 100 receives both camera system output 504c in the form of an image 702 and LiDAR system output 504a in the form of LiDAR data points 704. In use, the data processing systems of the AV 100 compares the image 702 to the data points 704. In particular, a physical object 706 identified in the image 702 is also identified among the data points 704. In this way, the AV 100 perceives the boundaries of the physical object based on the contour and density of the data points 704.

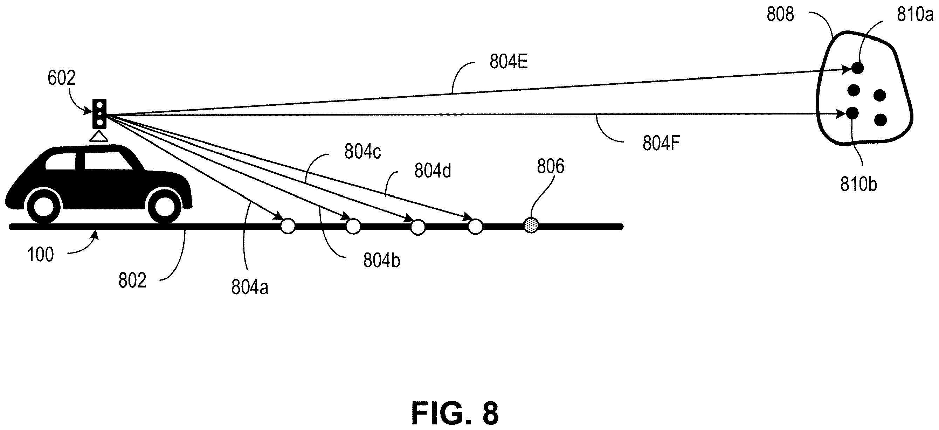

FIG. 8 shows the operation of the LiDAR system 602 in additional detail. As described above, the AV 100 detects the boundary of a physical object based on characteristics of the data points detected by the LiDAR system 602. As shown in FIG. 8, a flat object, such as the ground 802, will reflect light 804a-d emitted from a LiDAR system 602 in a consistent manner. Put another way, because the LiDAR system 602 emits light using consistent spacing, the ground 802 will reflect light back to the LiDAR system 602 with the same consistent spacing. As the AV 100 travels over the ground 802, the LiDAR system 602 will continue to detect light reflected by the next valid ground point 806 if nothing is obstructing the road. However, if an object 808 obstructs the road, light 804e-f emitted by the LiDAR system 602 will be reflected from points 810a-b in a manner inconsistent with the expected consistent manner. From this information, the AV 100 can determine that the object 808 is present.

### Path Planning

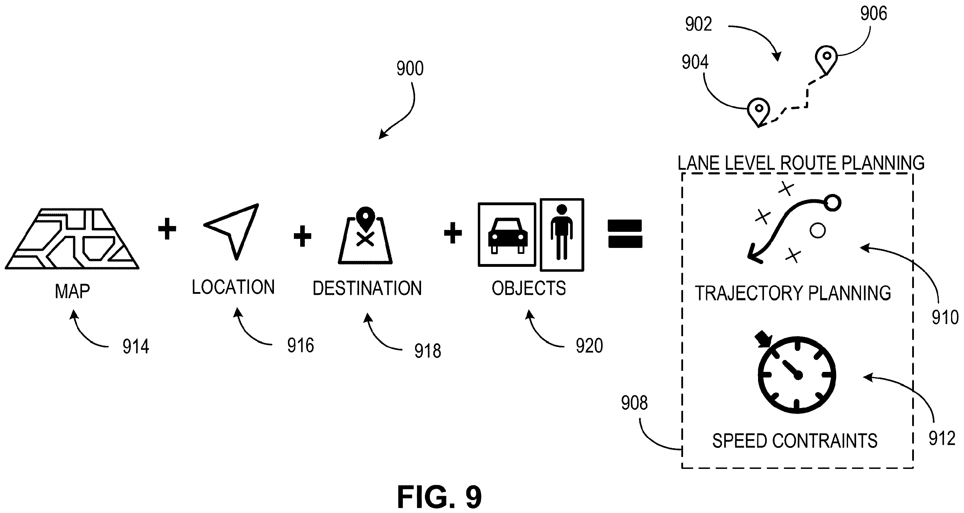

FIG. 9 shows a block diagram 900 of the relationships between inputs and outputs of a planning module 404 (e.g., as shown in FIG. 4). In general, the output of a planning module 404 is a route 902 from a start point 904 (e.g., source location or initial location), and an end point 906 (e.g., destination or final location). The route 902 is typically defined by one or more segments. For example, a segment is a distance to be traveled over at least a portion of a street, road, highway, driveway, or other physical area appropriate for automobile travel. In some examples, e.g., if the AV 100 is an off-road capable vehicle such as a four-wheel-drive (4WD) or all-wheel-drive (AWD) car, SUV, pick-up truck, or the like, the route 902 includes "off-road" segments such as unpaved paths or open fields.

In addition to the route 902, a planning module also outputs lane-level route planning data 908. The lane-level route planning data 908 is used to traverse segments of the route 902 based on conditions of the segment at a particular time. For example, if the route 902 includes a multi-lane highway, the lane-level route planning data 908 includes trajectory planning data 910 that the AV 100 can use to choose a lane among the multiple lanes, e.g., based on whether an exit is approaching, whether one or more of the lanes have other vehicles, or other factors that vary over the course of a few minutes or less. Similarly, in some implementations, the lane-level route planning data 908 includes speed constraints 912 specific to a segment of the route 902. For example, if the segment includes pedestrians or un-expected traffic, the speed constraints 912 may limit the AV 100 to a travel speed slower than an expected speed, e.g., a speed based on speed limit data for the segment.

In an embodiment, the inputs to the planning module 404 includes database data 914 (e.g., from the database module 410 shown in FIG. 4), current location data 916 (e.g., the AV position 418 shown in FIG. 4), destination data 918 (e.g., for the destination 412 shown in FIG. 4), and object data 920 (e.g., the classified objects 416 as perceived by the perception module 402 as shown in FIG. 4). In some embodiments, the database data 914 includes rules used in planning. Rules are specified using a formal language, e.g., using Boolean logic. In any given situation encountered by the AV 100, at least some of the rules will apply to the situation. A rule applies to a given situation if the rule has conditions that are met based on information available to the AV 100, e.g., information about the surrounding environment. Rules can have priority. For example, a rule that says, "if the road is a freeway, move to the leftmost lane" can have a lower priority than "if the exit is approaching within a mile, move to the rightmost lane."

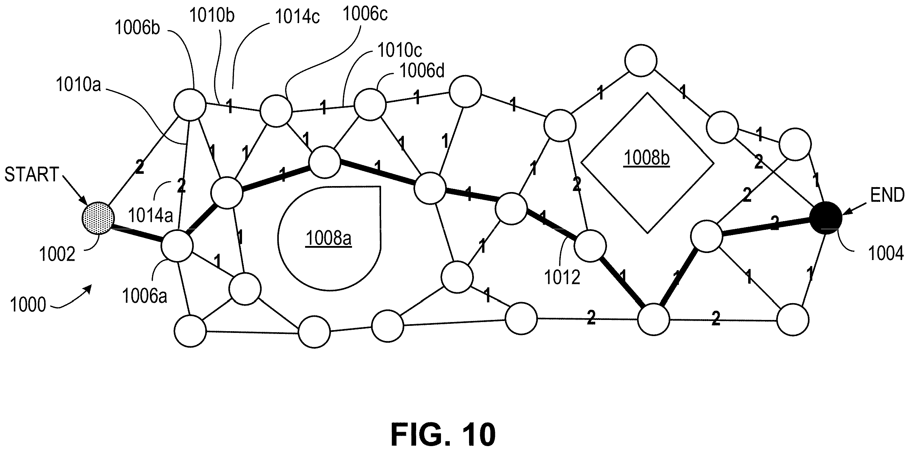

FIG. 10 shows a directed graph 1000 used in path planning, e.g., by the planning module 404 (FIG. 4). In general, a directed graph 1000 like the one shown in FIG. 10 is used to determine a path between any start point 1002 and end point 1004. In real-world terms, the distance separating the start point 1002 and end point 1004 may be relatively large (e.g., in two different metropolitan areas) or may be relatively small (e.g., two intersections abutting a city block or two lanes of a multi-lane road).

In an embodiment, the directed graph 1000 has nodes 1006a-d representing different locations between the start point 1002 and the end point 1004 that could be occupied by an AV 100. In some examples, e.g., when the start point 1002 and end point 1004 represent different metropolitan areas, the nodes 1006a-d represent segments of roads. In some examples, e.g., when the start point 1002 and the end point 1004 represent different locations on the same road, the nodes 1006a-d represent different positions on that road. In this way, the directed graph 1000 includes information at varying levels of granularity. In an embodiment, a directed graph having high granularity is also a subgraph of another directed graph having a larger scale. For example, a directed graph in which the start point 1002 and the end point 1004 are far away (e.g., many miles apart) has most of its information at a low granularity and is based on stored data, but also includes some high granularity information for the portion of the graph that represents physical locations in the field of view of the AV 100.

The nodes 1006a-d are distinct from objects 1008a-b which cannot overlap with a node. In an embodiment, when granularity is low, the objects 1008a-b represent regions that cannot be traversed by automobile, e.g., areas that have no streets or roads. When granularity is high, the objects 1008a-b represent physical objects in the field of view of the AV 100, e.g., other automobiles, pedestrians, or other entities with which the AV 100 cannot share physical space. In an embodiment, some or all of the objects 1008a-b are static objects (e.g., an object that does not change position such as a street lamp or utility pole) or dynamic objects (e.g., an object that is capable of changing position such as a pedestrian or other car).

The nodes 1006a-d are connected by edges 1010a-c. If two nodes 1006a-b are connected by an edge 1010a, it is possible for an AV 100 to travel between one node 1006a and the other node 1006b, e.g., without having to travel to an intermediate node before arriving at the other node 1006b. (When we refer to an AV 100 traveling between nodes, we mean that the AV 100 travels between the two physical positions represented by the respective nodes.) The edges 1010a-c are often bidirectional, in the sense that an AV 100 travels from a first node to a second node, or from the second node to the first node. In an embodiment, edges 1010a-c are unidirectional, in the sense that an AV 100 can travel from a first node to a second node, however the AV 100 cannot travel from the second node to the first node. Edges 1010a-c are unidirectional when they represent, for example, one-way streets, individual lanes of a street, road, or highway, or other features that can only be traversed in one direction due to legal or physical constraints.

In an embodiment, the planning module 404 uses the directed graph 1000 to identify a path 1012 made up of nodes and edges between the start point 1002 and end point 1004.

An edge 1010a-c has an associated cost 1014a-b. The cost 1014a-b is a value that represents the resources that will be expended if the AV 100 chooses that edge. A typical resource is time. For example, if one edge 1010a represents a physical distance that is twice that as another edge 1010b, then the associated cost 1014a of the first edge 1010a may be twice the associated cost 1014b of the second edge 1010b. Other factors that affect time include expected traffic, number of intersections, speed limit, etc. Another typical resource is fuel economy. Two edges 1010a-b may represent the same physical distance, but one edge 1010a may require more fuel than another edge 1010b, e.g., because of road conditions, expected weather, etc.

When the planning module 404 identifies a path 1012 between the start point 1002 and end point 1004, the planning module 404 typically chooses a path optimized for cost, e.g., the path that has the least total cost when the individual costs of the edges are added together.

### Autonomous Vehicle Control

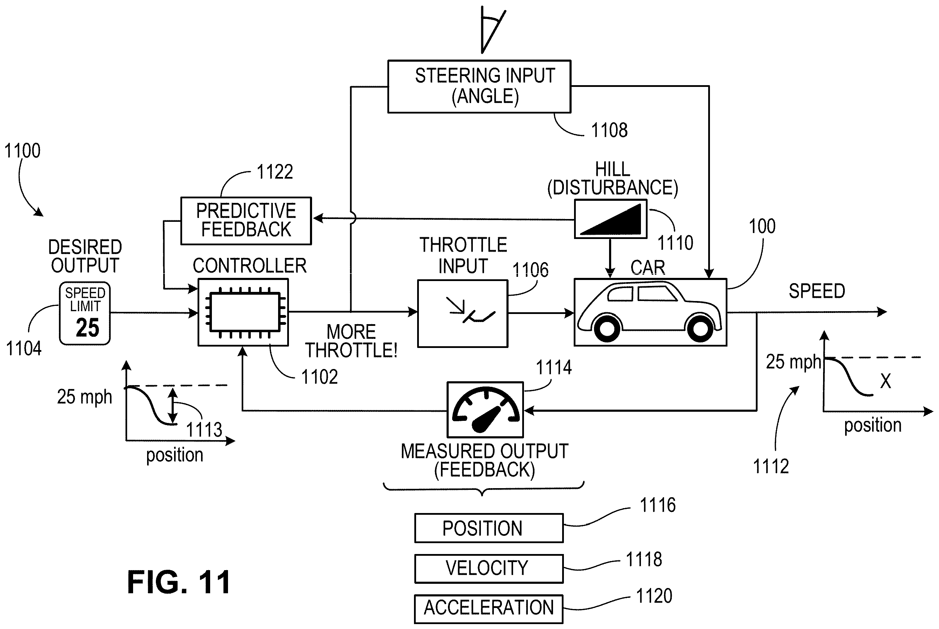

FIG. 11 shows a block diagram 1100 of the inputs and outputs of a control module 406 (e.g., as shown in FIG. 4). A control module operates in accordance with a controller 1102 which includes, for example, one or more processors (e.g., one or more computer processors such as microprocessors or microcontrollers or both) similar to processor 304, short-term and/or long-term data storage (e.g., memory random-access memory or flash memory or both) similar to main memory 306, ROM 1308, and storage device 210, and instructions stored in memory that carry out operations of the controller 1102 when the instructions are executed (e.g., by the one or more processors).

In an embodiment, the controller 1102 receives data representing a desired output 1104. The desired output 1104 typically includes a velocity, e.g., a speed and a heading. The desired output 1104 can be based on, for example, data received from a planning module 404 (e.g., as shown in FIG. 4). In accordance with the desired output 1104, the controller 1102 produces data usable as a throttle input 1106 and a steering input 1108. The throttle input 1106 represents the magnitude in which to engage the throttle (e.g., acceleration control) of an AV 100, e.g., by engaging the steering pedal, or engaging another throttle control, to achieve the desired output 1104. In some examples, the throttle input 1106 also includes data usable to engage the brake (e.g., deceleration control) of the AV 100. The steering input 1108 represents a steering angle, e.g., the angle at which the steering control (e.g., steering wheel, steering angle actuator, or other functionality for controlling steering angle) of the AV should be positioned to achieve the desired output 1104.

In an embodiment, the controller 1102 receives feedback that is used in adjusting the inputs provided to the throttle and steering. For example, if the AV 100 encounters a disturbance 1110, such as a hill, the measured speed 1112 of the AV 100 is lowered below the desired output speed. In an embodiment, any measured output 1114 is provided to the controller 1102 so that the necessary adjustments are performed, e.g., based on the differential 1113 between the measured speed and desired output. The measured output 1114 includes measured position 1116, measured velocity 1118, (including speed and heading), measured acceleration 1120, and other outputs measurable by sensors of the AV 100.

In an embodiment, information about the disturbance 1110 is detected in advance, e.g., by a sensor such as a camera or LiDAR sensor, and provided to a predictive feedback module 1122. The predictive feedback module 1122 then provides information to the controller 1102 that the controller 1102 can use to adjust accordingly. For example, if the sensors of the AV 100 detect ("see") a hill, this information can be used by the controller 1102 to prepare to engage the throttle at the appropriate time to avoid significant deceleration.

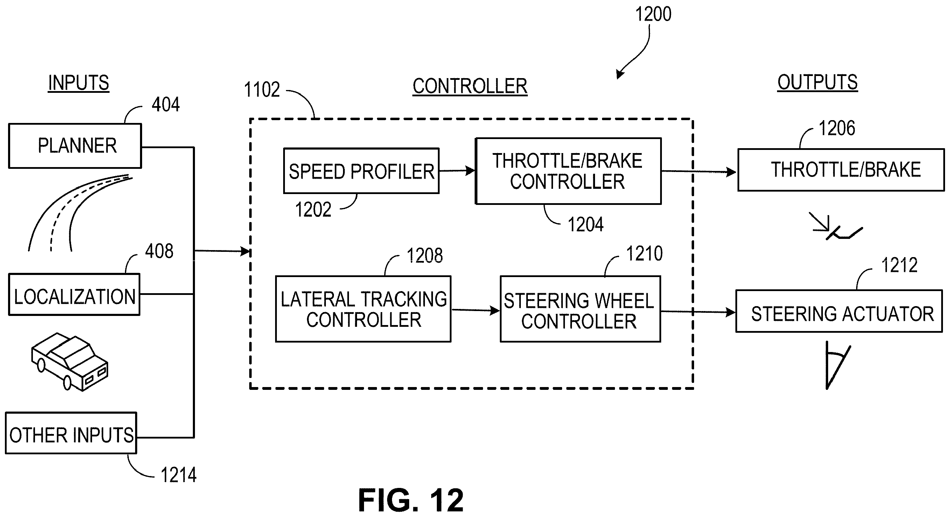

FIG. 12 shows a block diagram 1200 of the inputs, outputs, and components of the controller 1102. The controller 1102 has a speed profiler 1202 which affects the operation of a throttle/brake controller 1204. For example, the speed profiler 1202 instructs the throttle/brake controller 1204 to engage acceleration or engage deceleration using the throttle/brake 1206 depending on, e.g., feedback received by the controller 1102 and processed by the speed profiler 1202.

The controller 1102 also has a lateral tracking controller 1208 which affects the operation of a steering controller 1210. For example, the lateral tracking controller 1208 instructs the steering controller 1204 to adjust the position of the steering angle actuator 1212 depending on, e.g., feedback received by the controller 1102 and processed by the lateral tracking controller 1208.

The controller 1102 receives several inputs used to determine how to control the throttle/brake 1206 and steering angle actuator 1212. A planning module 404 provides information used by the controller 1102, for example, to choose a heading when the AV 100 begins operation and to determine which road segment to traverse when the AV 100 reaches an intersection. A localization module 408 provides information to the controller 1102 describing the current location of the AV 100, for example, so that the controller 1102 can determine if the AV 100 is at a location expected based on the manner in which the throttle/brake 1206 and steering angle actuator 1212 are being controlled. In an embodiment, the controller 1102 receives information from other inputs 1214, e.g., information received from databases, computer networks, etc.

### Architecture for Operation in an Emergency

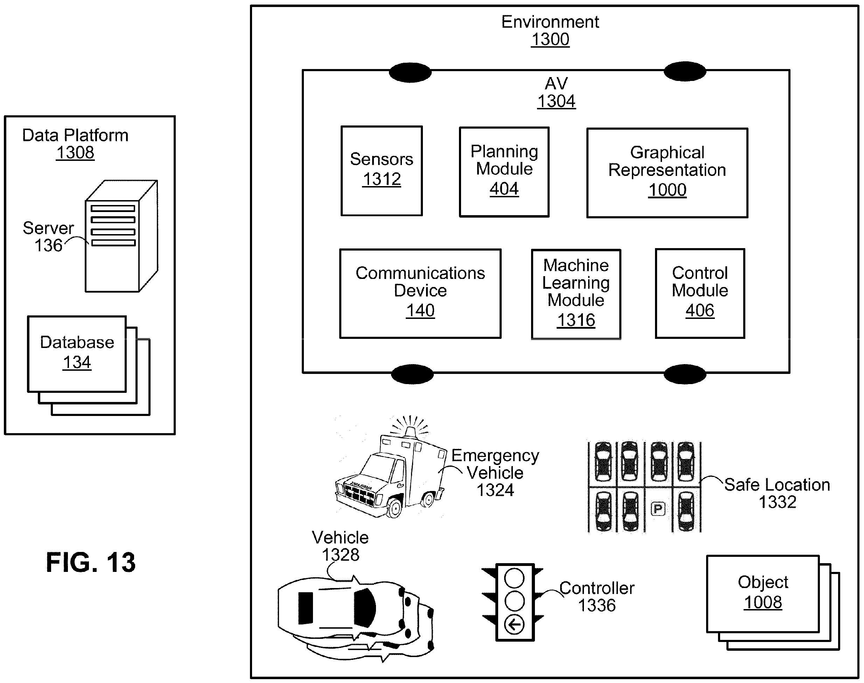

FIG. 13 illustrates a block diagram of an operating environment for operation of an AV 1304 in the event of an emergency, in accordance with one or more embodiments. The operating environment includes a data platform 1308 and an environment 1300 in which the AV 1304 is operating. In other embodiments, the operating environment includes additional or fewer entities or objects than those described herein.

The data platform 1308 receives real-time traffic information and communications from the AV 1304, one or more vehicles 1328, a controller 1336 of a traffic signal, and an emergency vehicle 1324. The communications include locations of the vehicles and the operating state of the controller 1336. The data platform assists in coordinating operations of the AV 1304, the one or more vehicles 1328, the controller 1336, and the emergency vehicle 1324. The data platform 1308 may be an example of the cloud data centers 204a or 204b illustrated and described above with reference to FIG. 2. The data platform 1308 includes a server 136 and one or more databases 134. In other embodiments, the operating environment includes additional or fewer entities or objects than those described herein.

The server 136 is illustrated and described above with reference to FIG. 1. The server 136 includes one or more processors to receive communications from the AV 1304, the one or more vehicles 1328, the controller 1336 of the traffic signal, and the emergency vehicle 1324. The processors further perform computations on data stored in the database 134. The processors further communicate data and messages, such as trajectories, traffic conditions, and instructions to the AV 1304, the one or more vehicles 1328, the controller 1336 of the traffic signal, and the emergency vehicle 1324.

In one embodiment, the server 136 receives from the AV 1304 or the vehicles 1328, spatiotemporal locations of the AV 1304 or the vehicles 1328. The server 136 receives information representing an operating mode of the vehicles. The operating mode may be manual (driven by an operator) or autonomous. The server 136 receives, from the emergency vehicle 1324, a trajectory of the emergency vehicle 1324. The server 136 determines, using the spatiotemporal locations, rerouting information for the AV 1304 and the vehicles 1328 to avoid the trajectory of the emergency vehicle 1324. The server 136 may also determine the rerouting information by determining a trajectory for the AV 1304 to avoid traffic. The server 136 thus engages in real time communication with the AV 1304 and emergency vehicle 1324. The server 136 transmits, to one or more vehicles, the rerouting information.

In one embodiment, the server 136 receives, from one or more traffic cameras or the controller 1336, one or more images representing traffic within the environment 1300. The server 136 may determine, using the one or more images, rerouting information for the emergency vehicle 1324 to avoid the traffic. The server 136 transmits, to the emergency vehicle 1324, the rerouting information. In one embodiment, the database 134 stores a weighted graphical representation 1000 of the environment 1300. The weighted graphical representation 1000 is described above with reference to FIG. 10 and further below with reference to FIG. 13. The server 136 updates, using the one or more images representing the traffic, the weighted graphical representation 1000 of the environment 1300. The weighted graphical representation 1000 is used to perform the rerouting and trajectory generation by the server 136.

In one embodiment, the server 136 transmits, to the controller 1336, the rerouting information, such that the controller 1336 is enabled to turn the traffic signal green to allow the AV 1304, the emergency vehicle 1324, or a vehicle 1328 to operate in accordance with the rerouting information. Responsive to determining that a type of the emergency vehicle 1324 is a law enforcement vehicle, the server 136 may transmit an instruction to the control module 406 to stop the AV 1304, e.g., when the AV 1304 is being pulled over by law enforcement. In one embodiment, responsive to determining that the type of the emergency vehicle 1324 is a law enforcement vehicle, the server 136 transmits an instruction to the control module 406 to unlock a door of the AV 1304.

The database 134 is illustrated and described above with reference to FIG. 1. The database 134 is communicatively coupled to the server 136 and is readable and writeable by the server 136. The database 134 stores the information including the spatiotemporal location of the vehicles and the operating mode of each vehicle.

The environment 1300 represents a geographical area, such as a state, a town, a neighborhood, or a road network or segment. The environment 1300 may be an example of the operating environment 190 illustrated and described above with reference to FIG. 1. The AV 1304, an emergency vehicle 1324, and one or more other vehicles 1328 are operating within the environment 1300. The environment 1300 also contains a safe location 1332, the controller 1336, and one or more objects 1008. In other embodiments, the environment 1300 includes additional or fewer entities or objects than those described herein.

The AV 1304 is a party or fully autonomous vehicle operating in the environment 1300. The AV 1304 includes one or more sensors 1312, a planning module 404, a communications device 140, a machine learning module 1316, and a control module 406. The AV 1304 stores or generates a weighted graphical representation 1000 of the environment 1300 to generate trajectories for the AV 1304. In other embodiments, the AV 1304 includes additional or fewer entities or objects than those described herein.

In driving mode, the AV 1304 uses sensor data from the one or more sensors 1312, for example, LiDAR data or stereo camera data, to detect and classify or label static objects and dynamic objects 1008 in the environment 1300. In one embodiment, the sensors 1312 sense a state of the environment 1300, such as the presence and structure of the one or more objects 1008, one or more vehicles 1328, and the emergency vehicle 1324, and transmit the sensor data and semantic data representing the state to the planning module 404. The one or more sensors 1312 may receive sensor data representing an object, e.g., the emergency vehicle 1324. The sensor data may be two-dimensional (2D) or three-dimensional (3D) visual data, audio data, an RF signal, or a message from the emergency vehicle 1324. The sensor data may be used to classify the object as an emergency vehicle.

The sensors 1312 are communicatively coupled to the planning module 404 to transmit the sensor data and semantic data. The sensors 1312 include one or more monocular or stereo video cameras in the visible light, infrared or thermal (or both) spectra, LiDAR, RADAR, ultrasonic sensors, time-of-flight (TOF) depth sensors, and may include temperature sensors, humidity sensors, or precipitation sensors. The sensors 1312 may be an example of the sensors 122-123 illustrated and described above with reference to FIG. 1. The classified/labeled objects 1008 and their dynamic characteristics if any, for example, positions, velocities, or headings, are used by the planning module 404 to predict a collision between the AV 1304 and the objects 1008, to generate a safe trajectory through the environment 1300, and to operate the AV 1304 to drive through the environment 1300 along the safe trajectory.

In one embodiment, the sensor data includes an image of a structural feature of an object (e.g., object 1008). For example, the structural feature may be a certain type of antenna belonging to law enforcement vehicles. The sensor data may include an image of a marking on the object 1008. For example, the marking may be a red cross signifying that the object 1008 is an ambulance. In one embodiment, the sensor data includes a feature of the environment 1300 (e.g., a sign indicating a pull-over area, a rest zone, or a break-down lane).

In one embodiment, the sensors 1312 include a global navigation satellite system (GNSS) sensor or an inertial measurement unit (IMU) used to determine a spatiotemporal location of the AV 1304. The perception module 402 or the planning module 404, or both, receive sensor data from the sensors 1312, generates trajectories for the AV 1304, and instructs the control module 406 on operating the controls of the AV 1304. The planning module 404 is illustrated and described above with reference to FIG. 4.

In one embodiment, the perception module 402 or the planning module 404, or both, identify, using the sensor data, whether an object 1008 in the environment 1300 is an emergency vehicle. For example, the sensor 1312 may be an RF sensor designed to receive RF signals. The sensor data may be a radio-frequency (RF) signal from the emergency vehicle 1324. The RF signal may be indicative of a type of the emergency vehicle 1324. For example, when operating in the emergency mode the emergency vehicle 1324 may broadcast messages to surrounding vehicles that it is an ambulance. The AV 1304 may detect the type of the emergency vehicle 1324 based on the RF signals. In one embodiment, the sensor data includes high-frequency sounds emitted by the emergency vehicle 1324. The high-frequency sound may not be audible to the human ear, however, they can be captured by audio sensors, e.g., microphones, on the AV 1304. The sounds may have an audio signature including information encoded within to reflect that the object is an emergency vehicle 1324 and that the type of the emergency vehicle 1324 is a law enforcement vehicle.

In one embodiment, the perception module 402 or the planning module 404, or both, detect, using the sensors 1312, a change in a frequency of soundwaves from the emergency vehicle 1324. The perception module 402 or the planning module 404, or both, may detect, using the sensors 1312, a change in a wavelength of the soundwaves. For example, the perception module 402 or the planning module 404, or both, use the Doppler Effect based on the change in frequency or wavelength of the sound waves in relation to the AV 1304 that is moving relative to the emergency vehicle 1324 to determine the speed of the emergency vehicle 1324 relative to the AV 1304. In one embodiment, the perception module 402 or the planning module 404, or both, use a plurality of microphones to determine a plurality of intensities of the sound waves. The sensors 1312 may include a plurality of directional microphones. Each microphone of the plurality of microphones may be located on a distinct side of the AV 1304. The planning module 404 determines a directional orientation of the emergency vehicle 1324 based on the intensities. The planning module 404 generates, using the spatiotemporal location of the emergency vehicle 1324 and the speed of the emergency vehicle 1324 relative to the AV 1304, a trajectory for the AV 1304 to avoid the emergency vehicle 1324. For example, the trajectory may include pulling over or navigating to a safe location 1332.

In one embodiment, responsive to identifying that the object is an emergency vehicle (e.g., 1324), the planning module 404 uses the sensor data to determine whether the emergency vehicle 1324 is operating in an emergency mode. The emergency mode is described as a mode in which the emergency vehicle 1324 provides audiovisual or other types of signals (e.g., flashing lights, sirens, etc.,) to surrounding vehicles (e.g., AV 1304 or vehicle 1328) to indicate that the emergency vehicle 1324 is responding to an emergency, such as a medical emergency, a disaster-relief situation, etc. The surrounding vehicles are to give way to the emergency vehicle 1324 or allow the emergency vehicle 1324 to pass. The emergency mode may also be described as a mode of operation of the emergency vehicle 1324 in which, under the law (e.g., road rules, city regulations, etc.,), surrounding vehicles are required to give way to the emergency vehicle 1324.

In one embodiment, to determine whether the emergency vehicle 1324 is operating in the emergency mode, the perception module 402 or the planning module 404, or both, detect, using the sensor data, whether lights of the emergency vehicle 1324 are flashing. The perception module 402 or the planning module 404, or both, may receive one or more notifications that one or more emergency vehicles are operating in an emergency mode. For example, the emergency vehicle 1324 may transmit RF signals or high-frequency sounds to the AV 1304. In one embodiment, the one or more sensors 1312 are used to determine a spatiotemporal location of the emergency vehicle 1324. The communications device 140 may transmit, to the one or more other vehicles 1328, the spatiotemporal location of the emergency vehicle 1324. The one or more other vehicles 1328 are therefore enabled to generate one or more trajectories to the safe location 1332.

In one embodiment, performing the emergency operation for the AV 1304 includes adjusting a trajectory of the AV 1304. For example, the AV 1304 may be autonomously navigating towards a pre-planned destination using a trajectory when it observes the emergency vehicle 1324 operating in the emergency mode. The AV 1304 may then adjust its trajectory to pull over. To generate or adjust a trajectory, the planning module 404 receives a description of the desired operation for the AV 1304 and generates a weighted graphical representation 1000 of the environment 1300. The weighted graphical representation 1000 is illustrated and described above with reference to FIG. 10. In one embodiment, the weighted graphical representation is a directed graph having nodes and edges. Each node corresponds to a spatiotemporal location or state of the AV 1304 and each edge corresponds to a travel segment. A weight on each edge may refer to a cost for the AV 1304 to traverse that edge, e.g., a length of the travel segment.

In one embodiment, a weight of a travel segment (edge) of the weighted graphical representation 1000 denotes a number of the vehicles 1328 (traffic) operating on the travel segment. A weight of a travel segment may denote a number of predicted collisions of the AV 1304 with objects 1008 when traveling along the travel segment. A weight of a travel segment may denote a number of predicted stops for the AV 1304 when traveling along the travel segment. A weight of a travel segment may denote a predicted lateral clearance between the AV 1304 and an object 1008 when traveling along the travel segment. A weight of a travel segment may denote an amount of road surface damage of the travel segment. A weight of a travel segment of the weighted graphical representation 1000 may denote a number of emergency vehicles 1324 operating on the travel segment.

The planning module 404 traverses the weighted graphical representation 1000 to produce speed and turning commands for the throttle and steering of the AV 1304. In one embodiment, the weighted graphical representation 1000 is overlaid on a configuration space (spatiotemporal location, speed, directional orientation, etc.,) for the AV 1304. Each configuration for the AV 1304 is associated with a vertex of the weighted graphical representation 1000. From each vertex, the AV 1304 is allowed to move to adjacent vertices as long as the path between them avoids a collision with an object, for example, the object 1008.

In one embodiment, the planning module 404 generates a trajectory by transmitting a request to the emergency vehicle 1324. The planning module 404 receives, from the emergency vehicle 1324, a plurality of travel segments. For example, the emergency vehicle 1324 may instruct the AV 1304 on certain safe lanes or roads to use. The planning module 404 identifies, using the graphical representation 1000 of the environment 1300, the trajectory such that the trajectory includes at least one of the received plurality of travel segments.

In one embodiment, the planning module 404 adjusts the graphical representation 1000 of the environment 1300 to increase one or more weights of one or more travel segments in the graphical representation 1000. The one or more travel segments are within a threshold distance to the emergency vehicle 1324. The planning module 404 thus increases the cost of traveling on lanes near the emergency vehicle 1324. The generated trajectory avoids those lanes. In one embodiment, the planning module 404 reduces, using the adjusted graphical representation 1000, an aggregate weight of a plurality of travel segments. The generated trajectory includes the plurality of travel segments.

In one embodiment, the perception module 402 or the planning module 404, or both, use the dynamic characteristics of the object 1008 or emergency vehicle 1324 to predict that the object 1008 or emergency vehicle 1324 will move in a straight line at a constant speed. The perception module 402 or the planning module 404, or both, may use an extended Kalman filter to estimate a trajectory for the object 1008 or emergency vehicle 1324. The perception module 402 or the planning module 404, or both, also estimate a point and time of intersection between the estimated trajectory of the object 1008 or emergency vehicle 1324 and the planned trajectory of AV 1304. The perception module 402 or the planning module 404, or both, thus determine potential behaviors for the object 1008 or emergency vehicle 1324 and assigns probabilities to each potential behavior to determine a likelihood of collision.

In one embodiment, the AV 1304 establishes communication with the emergency vehicle 1324 and may receive, from the emergency vehicle 1324, instructions representing an emergency operation for the AV 1304. The control module 406 overrides the autonomous operation of the AV 1304 to engage in the emergency operation. In one embodiment, the emergency operation for the AV 1304 includes navigating to a safe location, such as the safe location 1332. Navigating to the safe location 1332 may include decreasing a specified minimum lateral clearance between the AV 1304 and other vehicles 1328, traveling to a curb of a road, or traveling to a designated safe location such as a parking lot.

In one embodiment, the emergency operation includes responsive to determining that the type of the emergency vehicle 1324 is an ambulance, terminating navigation of the AV 1304 in accordance with a previously determined trajectory. For example, the AV 1304 will stop driving to its original destination and instead will pull over to let the emergency vehicle 1324 pass. The control module 406 may navigate the AV 1304 to a side of a road on which the AV 1304 is operating. In one embodiment, the planning module 404 determines a trajectory of the emergency vehicle 1324 using the sensor data and moving object tracking. The control module 406 operates the AV 1304 to avoid the determined trajectory of the emergency vehicle 1324.

In one embodiment, the perception module 402 or the planning module 404, or both, determine, using the sensor data, one or more spatiotemporal locations of the one or more other vehicles 1328. In another embodiment, the planning module 404 transmits, to the server 136, a spatiotemporal location of the AV 1304. The planning module 404 receives, from the server 136, spatiotemporal locations of the one or more other vehicles 1328 that are within a threshold distance to the AV 1304. The planning module 404 uses the control module 406 to navigate the AV 1304 to avoid a collision of the AV 1304 with the one or more other vehicles 1328.

In one embodiment, the perception module 402 or the planning module 404, or both, transmit, to at least one of one or more emergency vehicles 1324, a type of the AV 1304. Thus the AV 1304 identifies itself to the emergency vehicle 1324. The perception module 402 or the planning module 404, or both, receive, from the emergency vehicle 1324, instructions to operate the AV 1304. The instructions are further received by one or more other vehicles 1328 having a different type. The AV 1304 translates the received instructions to an emergency operation executable by the type of the AV 1304. High-level programmable instructions from an emergency vehicle 1324 may thus be converted to lower-level machine or assembly instructions by vehicles of different types. The control module 406 operates the AV 1304 in accordance with the emergency operation. The received high-level instructions are further translated, by the one or more other vehicles 1328, to one or more emergency operations executable by the one or more other vehicles 1328. For example, different types of AVs will react differently and generate different lower-level instructions based on the more general instructions from the emergency vehicle 1324.

In one embodiment, the perception module 402 or the planning module 404, or both, map a feature of the sensor data to a drivable area within a map of the environment 1300. The mapping is performed in a mapping mode of the AV 1304. The perception module 402 or the planning module 404, or both, may map the feature to the drivable area by extracting, using the sensor data, a polygon including a plurality of geometric blocks. Each geometric block corresponds to a drivable segment of the drivable area. The planning module 404 superimposes the plurality of geometric blocks onto the sensor data and generates a union of the superimposed plurality of geometric blocks.

In the mapping mode of operation, the planning module 404 extracts, using the feature of the environment 1300, semantic data corresponding to the drivable area. For example, the semantic data may include markings on a traffic sign, a road marking, a traffic direction, whether the safe zone is near a building or a law enforcement location, etc. In one embodiment, the semantic data includes a logical driving constraint associated with navigating the AV 1304 to the drivable area. For example, the logical driving constraint may be a one-way attribute of a street, a left turn, a roundabout, etc. The perception module 402 or the planning module 404, or both, may determine, using the semantic data, whether vehicles using the map may navigate to the drivable area in the event of an emergency. For example, if the drivable area is an elementary school, the map may indicate that other vehicles should not enter the drivable area. The planning module 404 annotates, using the semantic data, the drivable area within the map.

In one embodiment, the drivable area is a breakdown lane. The planning module 404 embeds instructions in the map to navigate to the drivable area in the event of an emergency. The embedded instructions may include instructions to pull over to a side of a road on which the AV 1304 is operating. The embedded instructions may include instructions to stop the AV 1304 within the drivable area. The embedded instructions may include instructions to reduce an operating speed of the AV 1304 until the AV1304 reaches the drivable area. The embedded instructions may include instructions to adjust a trajectory of the AV 1304 towards the drivable area. In one embodiment, the embedded instructions include instructions for the communications device 140 to transmit a message to the emergency vehicle 1324 requesting an emergency command. For example, an icon embedded on the map can indicate that when the AV 1304 reaches a safe location, it should seek further instructions from the emergency vehicle 1324. In one embodiment, the embedded instructions include instructions to determine, using the sensor data, a spatial location of the AV 1304 relative to a boundary of the drivable area. This assists the AV 1304 in positioning itself geographically relative to the safe location 1332. The planning module 404 transmits the instructions to the control module 406.

Responsive to determining that the emergency vehicle 1324 is operating in the emergency mode, the planning module 404 transmits, to the control module 406, instructions representing an emergency operation for the AV 1304. For example, the instructions may be for the AV 1304 to pull over, stop navigation, continue driving at a certain speed, transmit a message to the emergency vehicle 1324, or transmit a message to the server 136.

In one embodiment, the perception module 402 or the planning module 404, or both, determine, using the one or more sensors 1312, that the emergency vehicle 1324 has completed operating in the emergency mode. For example, the lights may no longer be flashing or the emergency vehicle 1324 may transmit RF signals indicating the emergency mode is no longer being used. The perception module 402 or the planning module 404, or both, detect that the emergency vehicle 1324 has stopped flashing lights of the emergency vehicle 1324. The communications device 140 may receive, from the emergency vehicle 1324, instructions to resume autonomous operation. The perception module 402 or the planning module 404, or both, may detect, using the one or more sensors 1312, that the emergency vehicle 1324 has stopped sounding a siren. The AV 1304 resumes, using the control module 406, autonomous operation. The communications device 140 may broadcast, using a beacon, information indicating that the AV 1304 is resuming autonomous operation. The planning module 404 generates a trajectory from the safe location 1332 to a new destination location.

The communications device 140 communicates with the one or more vehicles 1328, the controller 1336 of the traffic signal, the emergency vehicle 1324, and the data platform 1308. The communications device 140 is illustrated and described above with reference to FIG. 1. In one embodiment, the communications device 140 transmits, to the server 136, a spatiotemporal location of the AV 1304, the nature of the emergency operation for the AV 1304, the identified type of the emergency vehicle 1324, an operating speed of the AV 1304, or information representing overriding of autonomous operation of the AV 1304. The server 136 may use this information to provide rerouting information to the AV 1304, the emergency vehicle 1324, or the vehicle 1328.

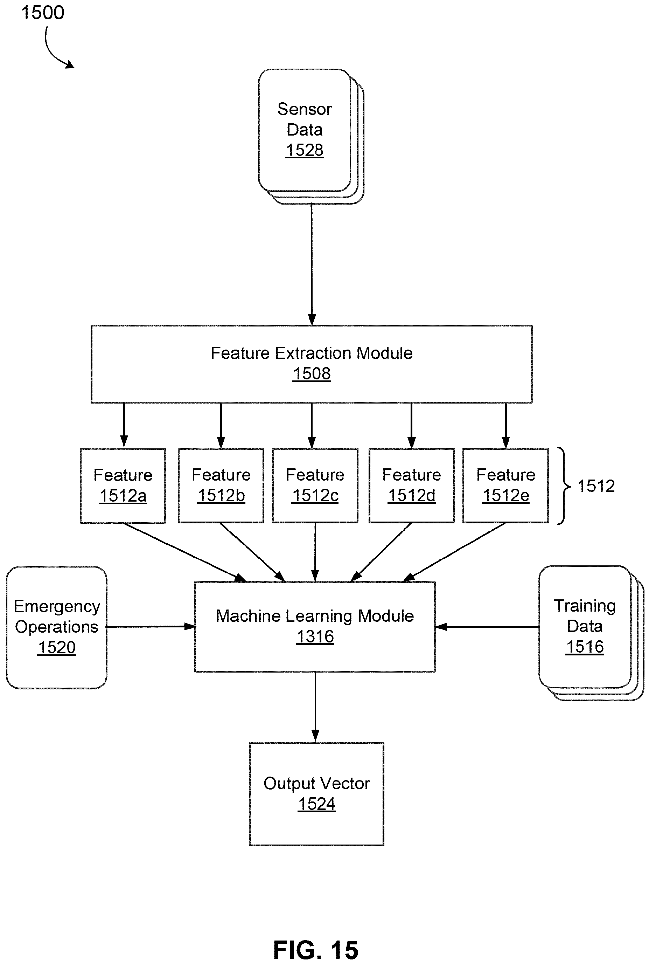

The machine learning module 1316 receives features extracted from sensor data or other types of data and produces inferences, such as whether the features or data corresponds to a particular type of object 1008 or whether the object 1008 is performing a particular action. In some embodiments, the machine learning module 1316 extracts a feature vector from input data to generate the inferences. The machine learning module 1316 is trained using training data sets to produce the inferences. The machine learning module 1316 is illustrated and described in detail below with reference to FIG. 15. In one embodiment, the planning module transmits features as input to the machine learning module 1316. The machine learning module 1316 is trained to receive one or more features and generate a score indicative of a probability that the one or more features correspond to the emergency vehicle 1324.

The control module 406, illustrated and described above with reference to FIG. 4, operates the AV 1304 in accordance with a trajectory or an emergency operation triggered by the emergency vehicle. The control module 406 uses a trajectory or instructions generated by the planning module 404 to operate the brakes 420c, steering 420a, and throttle 420b (illustrated and described above with reference to FIG. 4) of the AV 1304. In one embodiment, the control module 406 operates the AV 1304 in accordance with an emergency operation, e.g., to avoid a collision with the emergency vehicle 1324, the vehicle 1328, or the object 1008.

In one embodiment, the control module 406 operates the AV 1304 within a discretized drivable area in accordance with the trajectory or emergency operation while performing collision checking or probabilistically exploring the drivable area around the emergency vehicle 1324, the vehicle 1328, or the object 1008. In another embodiment, if the emergency vehicle 1324, the vehicle 1328, or the object 1008 are moving, the planning module 404 infers intention of the emergency vehicle 1324, the vehicle 1328, or the object 1008 from its motion, such as giving way or acting aggressively. The control module 1340 operates the steering control 102, brakes 103, gears, or accelerator pedal if a predicted time to collision with the emergency vehicle 1324, the vehicle 1328, or the object 1008 falls below a threshold.

The emergency vehicle 1324 is a law enforcement vehicle, ambulance, traffic management vehicle, construction vehicle, fire truck or other vehicle used by the government or a private entity to perform emergency services, e.g., attending to a medical emergency, a fire, an accident, etc. The emergency vehicle 1324 may sound a siren, flash its lights, or issue electronic communications (e.g., RF signals or high-frequency audio codes) to notify the AV 1304, the vehicle 1328, or the object 1008 that the emergency vehicle 1324 is operating in an emergency mode.

The safe location 1332 is a geographic or spatiotemporal location that the AV 1304 or the vehicle 1328 can move to when they perceive that the emergency vehicle 1324 is operating in the emergency mode. In one embodiment, the safe location 1332 refers to a breakdown lane or a side of a road that the AV 1304 can move to. In another embodiment, the safe location 1332 is a designated area such as a parking lot or a street in a neighborhood for the AV 1304 to move to to let the emergency vehicle 1324 pass. In another embodiment, moving to the safe location 1332 includes decreasing a minimum lateral clearance limit from the vehicle 1328 or the object 1008, such that the emergency vehicle 1324 can pass.

In one embodiment, the perception module 402 or the planning module 404, or both, determine that the emergency vehicle 1324 is operating in the emergency mode. The perception module 402 or the planning module 404, or both, identify, using a spatiotemporal location of the AV 1304, a safe location (e.g., safe location 1332) that is within a threshold distance to the AV 1304. For example, the perception module 402 or the planning module 404, or both, locate a nearby safe location to travel to. To identify the safe location 1332, the perception module 402 or the planning module 404, or both, may scan a map of the environment 1300. The planning module 404 detects an icon within the map, wherein the icon corresponds to or designates the safe location 1332. The perception module 402 or the planning module 404, or both, further identify, using the one or more sensors 1312, a vacant parking spot for the AV 1304 within the safe location 1332. The AV 1304 will then travel to the safe location 1332 only if there is a vacant spot there.

The planning module 404 may identify the safe location 1332 by transmitting, to the server 136, the spatiotemporal location of the AV 1304. The communications device 140 receives, from the server 136, an address of the safe location 1332. In one embodiment, responsive to transmitting a request to the emergency vehicle 1324, the communications device 140 receives, from the emergency vehicle 1324, a list of safe locations. The planning module 404 identifies, using the received list of safe locations, the safe location 1332.

The planning module 404 generates a trajectory for operating the AV 1304 from its spatiotemporal location to the safe location 1332, such that a distance between the AV 1304 and the emergency vehicle 1324 is greater than a threshold distance while operating the AV 1304 in accordance with the trajectory. Thus the AV 1304 drives to the safe location 1332 while maintaining a minimum lateral clearance from the emergency vehicle 1324. In one embodiment, the planning module 404 determines that a probability of a collision of the AV 1304 with another vehicle 1328 is greater than zero. The planning module 404 instructs the control module 406 to stop the AV 1304. In one embodiment, the planning module 404 receives, from another vehicle 1328, a message that the other vehicle 1328 is navigating to the safe location 1332. The planning module 404 plots a trajectory to follow the other vehicle 1328 to the safe location 1332.

The one or more vehicles 1328 are non-autonomous, partly autonomous, or fully autonomous vehicles operating or parked in the environment 1300. In one embodiment, the vehicle 1328 is an emergency vehicle, a construction truck, a train, a boat, or a bus. In one embodiment, the planning module 404 uses machine vision techniques such as edge detection to determine, using the sensor data, that one or more other vehicles 1328 are located between the AV 1304 and the emergency vehicle 1324. The planning module 404 may instruct the control module 406 to operate the AV 1304 by reducing a lateral clearance between the AV 1304 and the one or more other vehicles 1328. For example, the AV 1304 moves closer to the other vehicles 1328 to let the emergency vehicle 1324 pass.

In one embodiment, responsive to determining that the emergency vehicle 1324 is operating in the emergency mode, the planning module 404 transmits, to the control module 406, instructions representing an emergency operation for the AV 1304. For example, the instructions may instruct the AV 1304 to pull over, stop, continue at a certain speed, or transmit a message to the emergency vehicle 1324. The perception module 402 or the planning module 404, or both, detect, using one or more sensors 1312, presence of one or more objects (e.g., vehicles 1328). The perception module 402 or the planning module 404, or both, further determine, using the one or more sensors 1312, that at least one vehicle 1328 is located within a threshold distance of the AV 1304. The planning module 404 configures a display to show, to the vehicle 1328, a message indicating that the AV 1304 is operating in accordance with the emergency operation.

In one embodiment, the message includes an instruction for the other vehicle 1328 to follow the AV 1304. For example, the AV 1304 may guide the vehicle 1328 to the safe location 1332. The message may include an address of the safe location 1332 that the AV 1304 is navigating to. If the AV 1304 senses a pedestrian near the AV 1304, the planning module 404 may alert the pedestrian by broadcasting an audio message that the AV 1304 is engaging in the emergency operation, e.g., pulling over. The AV 1304 may request the pedestrian to step aside for safety.

Displaying the message can include broadcasting, using one or more loudspeakers of the AV 1304, audible information to the vehicle 1328, a pedestrian, a cyclist, or another object. The AV 1304 may also transmit text or graphical information to a display device 312 of the vehicle. For example, the AV 1304 may display the message on an LCD screen inside the AV 1304 to a passenger. In one embodiment, the AV 1304 displays the message by broadcasting using a beacon or a flashing or rotating light, radio signals, audio signals, etc. The communications device 140 may transmit the message to the server 136 such that the server 136 is enabled to transmit rerouting information to one or more other vehicles 1328. The AV 1304 may display the message by presenting or projecting the message on a window of the AV 1304, a windshield of the AV 1304, a door of the AV 1304, or a hood of the AV 1304. The AV 1304 may display the message by transmitting the message to an electronic device such as a tablet or smartphone of a passenger of the AV 1304, an electronic device of another vehicle 1328, or a traffic control system 1336.

In one embodiment, the communications device 140 communicates with the controller 1336. The communications device 140 transmits the message to the controller 1336 such that the controller 1336 is enabled to turn the traffic signal green to allow the AV 1304 to operate in accordance with the emergency operation. For example, the controller 1336 turns the lights green or red on different roads to permit the AV 1304 and other vehicles 1328 to depart the emergency area and avoid the emergency vehicle 1324 or travel to the safe location 1332.

The controller 1336 controls the sequence of one or more traffic signals in the environment 1300. The controller 1336 is communicatively coupled to the data platform 1308 and may be communicatively coupled to the emergency vehicle 1324, the AV 1304, or the vehicle 1328. For example, the data platform 1308 or emergency vehicle 1324 may transmit a message to the controller 1336 to turn a traffic light green such that the emergency vehicle can reach the site of an emergency faster.

The environment 1300 includes one or more objects 1008, which are physical entities external to the AV 1304. The objects 1008 may be examples of the objects 1008a-b illustrated and described above with reference to FIG. 10. An object can be static or dynamic. A static object can include but is not limited to: a traffic signal, a building, an elevation of a drivable area, a curb located adjacent to a drivable area, a median separating two lanes of a drivable area, a construction zone, and any other object that does not move within the environment 1300. A dynamic object can include but is not limited to: another vehicle, a pedestrian, a cyclist, and any other object that moves within the environment 1300. The one or more vehicles 1328 and the emergency vehicle 1324 are examples of dynamic objects.

In one embodiment, the AV 1304 detects an incident, e.g., a crash, an emergency, or a violation, that the AV 1304 is involved in and signals for assistance to an emergency vehicle 1324. The one or more sensors 1312 are used to receive sensor data. For example, mechanical shock data may be received from an inertial measurement unit (IMU), an accelerometer, or a contact sensor of the AV 1304. In one embodiment, the sensors include an IMU and the sensor data includes a measurement of mechanical shock experienced by the AV 1304. The sensors 1312 may include a contact sensor embedded on a bumper or a fender of the AV 1304. The sensors 1312 may include a body control module and the sensor data may indicate that an airbag of the AV 1304 has deployed.

A camera of the AV 1304 may also capture images of a collision of the AV 1304 with an object 1008 or a law enforcement vehicle pulling over the AV 1304. The planning module 404 determines, using the sensor data, whether an emergency involving the AV 1304 has occurred. Determining that the emergency has occurred includes identifying, using the sensor data, a difference between a speed of the AV 1304 and a rotational speed of a wheel of the AV 1304. In one embodiment, the planning module 404 determines that the emergency has occurred by identifying, using the sensor data, a change in a speed of the AV 1304 within a time period. The change in the speed exceeds a threshold speed and the time period is below a threshold time period. For example, a change in speed from 60 mph to 0 mph in a second reveals that a crash has occurred.

In one embodiment, the planning module 404 determines that the emergency has occurred by determining, using the sensor data, that a number of the one or more sensors 1312 have failed and the number is above a threshold value. For example, if a large number of sensors 1312 fail together, it may signal an emergency since the AV 1304 has lost perception. In one embodiment, the planning module 404 determines that the emergency has occurred by detecting, using the one or more sensors 1312, that a window or a windshield of the AV 1304 has broken. For example, a glass break detector (or glass break sensor) of the AV 1304 may trigger a warning when glass of the windshield is broken. The glass break detectors may detect not just when a windshield or window breaks but also when a window or door is opened by a thief. The glass break detector functions by using an audio microphone that recognizes the frequency of broken glass. If the right frequency is detected, the alarm sounds. In one embodiment, the planning module 404 determines that the emergency has occurred by receiving, using an input device 314 of the AV 1304, a message from a passenger indicating the emergency. For example, the passenger input device 314 may be a button within an "In Case of Emergency" glass panel.

In one embodiment, the one or more sensors 1312 include a microphone. The planning module 404 determines that the emergency has occurred by detecting, using sounds captured by the microphone, a collision of the AV 1304. For example, certain amplitudes or frequencies of sound may signal a collision. Other frequencies or amplitudes may signal a minor scrape. Yet other frequencies and amplitudes may signal that a law enforcement officer is pulling over the AV 1304. The one or more sensors 1312 may include a camera. The planning module 404 may determine that the emergency has occurred by detecting, using images captured by the camera, a collision of the AV 1304. The planning module 404 may determine that the emergency has occurred by detecting, using images captured by the camera, a law enforcement vehicle that is signaling to the AV 1304 to pull over.

Responsive to determining that the emergency has occurred, the planning module 404 identifies, using the sensor data, a type of the emergency, e.g., a crash, a traffic violation, etc. The planning module 404 retrieves, using the type of the emergency, an emergency operation to be performed by the AV 1304. For example, a list of emergency operation commands may be retrieved from a data storage unit 142 of the AV 1304 or from the database 134. The data storage unit 142 is illustrated and described above with reference to FIG. 1. F4. The AV 1304 may transmit, to the server 136, a request for the emergency operation. The request includes the type of the emergency. The control module 406 operates the AV 1304 in accordance with the emergency operation.

In one embodiment, responsive to determining that the emergency has occurred, the planning module 404 transmits, to an emergency vehicle 1324, a request for assistance. The request may be to law enforcement, an ambulance, or a fire truck based on the type of the emergency. The request may be a phone call, a text message, or other communication. The request for assistance may include the spatiotemporal location of the AV 1304. In one embodiment, responsive to the determining that the emergency involving the AV 1304 has occurred, an immobilizer unit of the AV 1304 terminates operation of steering 420a and throttle 420b (illustrated and described above with reference to FIG. 4) of the AV 1304.

In one embodiment, the planning module 404 authenticates, using an input device of the AV 1304, an identity of a law enforcement officer who is outside the AV 1304. For example, the law enforcement officer may display his badge to a camera or type a message into an external keyboard. Responsive to authenticating the identity of the law enforcement officer, the control module 406 may unlock a door of the AV 1304. The planning module 404 may execute a self-test sequence to determine a portion of the AV 1304 that is still functional. For example, once the AV 1304 has crashed, the AV 1304 determines which parts are still working and can continue to operate. If the AV 1304 has lost perception, it can still be driven by a human operator. If the AV 1304 has lost ability to be driven but has perception, it can be used as a traffic camera or communication hub. The planning module 404 may further display, on a display device 314, an instruction to emergency personnel. For example, when the AV 1304 recognizes that emergency personnel are approaching, the planning module 404 may unlock the doors and display instructions to the emergency personnel to disable autonomous mode and drive the AV 1304 manually or communicate with the server 136.

The planning module 404 detects, using the sensors 1312 or a message from the emergency vehicle 1324, that the emergency has terminated. The control module 406 then locks a door of the AV 1304. Once the emergency has terminated, the planning module 404 may terminate authentication of emergency personnel.

Among the benefits and advantages of the embodiments disclosed herein are that different and complex motion constraints can be addressed by an AV system to prevent collisions with emergency vehicles and other objects. The technical effects of the disclosed embodiments increase navigational safety for the AV as well as for emergency vehicles, pedestrians, and other vehicles. Emergency situations can be addressed by the AV as well as by other vehicles when the AV broadcasts a message instructing other vehicles to undertake emergency operations. Communication between the AV and the emergency vehicle is established, such that the emergency vehicle can temporarily override the autonomous operation of the AV to assist the emergency vehicle in performing in the emergency mode. The overriding includes authenticating the emergency vehicle and authorizing the emergency vehicle a degree of control of the AV.

The sensors of the AV capture sensor data representing a structure of an object and transform the sensor data into physical operations for the AV. The physical operations increase lateral clearance for the emergency vehicle to attend to an emergency. The embodiments reduce the time for maneuvering by the AV and the emergency vehicle, and reduce the response time of the emergency vehicle. By temporarily overriding the original autonomous operation of the AV and placing the AV in an emergency operation mode, the time taken to maneuver for the emergency vehicle and the AV is reduced. Safety of the AV, the emergency vehicle, and other vehicles on the road is increased.

The quality of communication between the emergency vehicles, the AV, and the other vehicles is increased, while the communication time is reduced. The fuel spent while idling, by other vehicles, is reduced, such that traffic congestion is avoided. The data platform reduces traffic congestion and damage to the road surface by efficiently routing AVs, other vehicles, and emergency vehicles on a global basis. By avoiding local congestion hotspots, the embodiments disclosed herein reduce fuel consumption by vehicles.

### Example of Operation in an Emergency

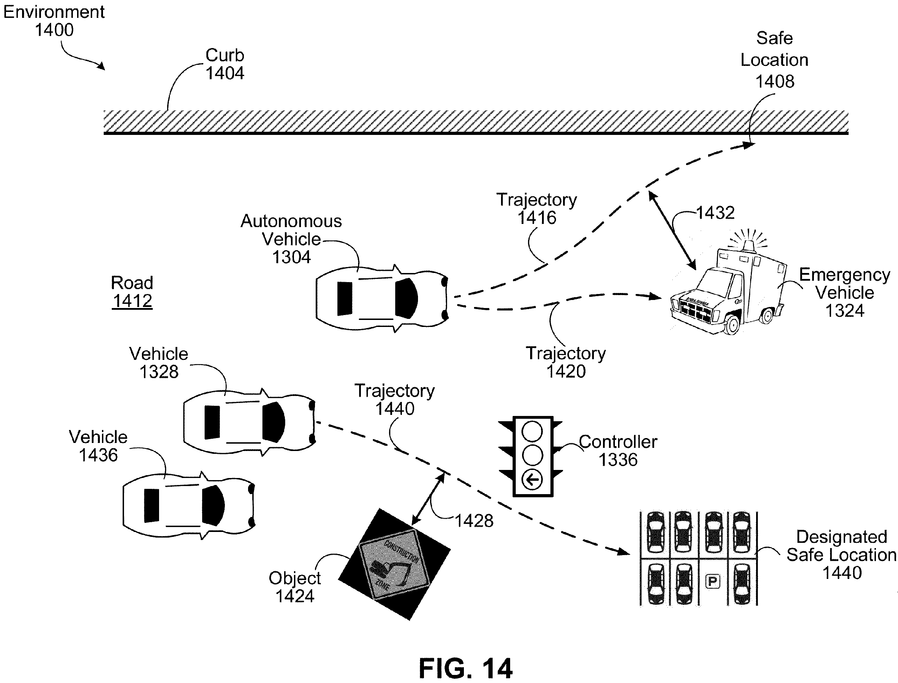

FIG. 14 illustrates an example of operation of an AV 1304 in the event of an emergency, in accordance with one or more embodiments. The environment 1400 in FIG. 14 represents a geographical area, such as a state, a town, a neighborhood, or a road network or segment. The environment 1400 may be an example of the operating environment 190 illustrated and described above with reference to FIG. 1. The environment 1400 includes a road 1412, a curb 1404, a safe location 1408 by the side of the road 1412, an object 1424, and a designated safe location 1332. In the example of FIG. 14, the object 1424 is a construction zone. The AV 1304, an emergency vehicle 1324, and other vehicles 1328,1436 are operating within the environment 1400. The environment 1400 also contains a controller 1336 for a traffic light. In other embodiments, the environment 1400 includes additional or fewer entities or objects than those described herein.

Referring to FIG. 14, the AV 1304 is traveling along the road 1412. The AV 1304 is traveling on a trajectory 1420. The AV 1304 receives, using one or more sensors 1312, sensor data representing an object (the emergency vehicle 1324) located within the environment 1400. The sensor data may be 2D or 3D audiovisual data or an RF signal. The AV 1304 identifies, using the sensor data, whether the object is an emergency vehicle. Responsive to identifying that the object is the emergency vehicle 1324, the AV 1304 determines, using the sensor data, whether the emergency vehicle 1324 is operating in an emergency mode. Responsive to determining that the emergency vehicle 1324 is operating in the emergency mode, the AV 1304 uses its control module 406 to operate in accordance with an emergency operation. The AV 1304 identifies, using a spatiotemporal location of the AV 1304, a safe location 1408 that is within a threshold distance to the AV 1304. The AV 1304 generates a new trajectory 1416 for operating the AV 1304 from the spatiotemporal location to the safe location 1408. The AV 1304 drives to the safe location 1408 by the side of the road 1412.

The AV 1304 may receive, from the emergency vehicle 1324, instructions to operate the AV 1304. The instructions are further received by one or more other vehicles 1328,1436. The other vehicles 1328,1436 translate the received instructions to emergency operations executable by the other vehicles 1328,1436. The other vehicles 1328,1436 generate a trajectory 1440 and navigate using the trajectory 1440 to the designated safe location 1440. The other vehicles 1328,1436 may generate the trajectory 1440 such that the other vehicles 1328,1436 maintain a minimum lateral clearance 1428 from the object 1424, which is a construction zone.

In one embodiment, the AV 1304 transmits, to the controller 1336, a message representing the emergency operations such that the controller 1336 is enabled to turn the traffic signal green to allow the vehicles 1328,1436 to operate in accordance with the emergency operations. In another embodiment, the server 136 may transmit, to the controller 1336, rerouting information for the emergency vehicle 1324, such that the controller 1336 is enabled to turn the traffic signal green to allow the emergency vehicle 1324 to operate in accordance with the rerouting information.

### Machine Learning Process for Operation in an Emergency

FIG. 15 illustrates a machine learning process 1500 for operation of an AV 1304 in the event of an emergency, in accordance with one or more embodiments. The machine learning process 1500 includes operations by a feature extraction module 1508 and a machine learning module 1316. In other embodiments, the machine learning process 1500 includes additional or fewer steps or components than those described herein. Similarly, the functions can be distributed among the components and/or different entities in a different manner than is described here.

The feature extraction module 1508 extracts a feature vector 1512 from the sensor data 1528. The feature extraction module 1508 may be implemented in hardware, software, or a combination thereof. The feature vector 1512 includes one or more features, which are compact, non-redundant representations of the sensor data 1528. For example, the feature vector may include a feature describing a structure or shape of the emergency vehicle 1324 that the sensors 1312 have captured. In some embodiments, the feature extraction module 1508 is located within or integrated into the machine learning module 1316.

A feature 1512a of the extracted feature vector 1512 may represent the emergency mode of the emergency vehicle 1324. For example, the feature 1512a may represent flashing lights, sounding a siren, etc. Machine vision may be used to identify the flashing lights. A feature 1512b of the extracted feature vector 1512 may include letters or numbers on a license plate of the emergency vehicle 1324. Object recognition may be used to determine a type of the emergency vehicle 1324. A feature 1512c of the extracted feature vector 1512 may include a code embedded within high-frequency sounds emitted by the emergency vehicle 1324. The code may represent the type of the emergency vehicle 1324 (e.g., ambulance, law enforcement vehicle, fire truck, etc.). For example, the high-frequency sounds may be ultrasound signals used for real-time locating, tracking, and object recognition.

A feature 1512d of the extracted feature vector 1512 may represent a sign indicating a pull-over area, a rest area, or a break-down lane. A feature 1512e of the extracted feature vector 1512 may represent a sign indicating a spatiotemporal location of the environment 1300 for emergency vehicles to enter a roadway. Certain roadways may have lanes or entrances marked for law enforcement or other emergency vehicles to enter. Such a feature can indicate to the AV 1304 that a safe location is nearby or that the AV 1304 should not enter the marked entryway for emergency vehicles. A feature can include a color of an object 1008 within the environment 1300 or a marking on the drivable area. For example, a designated safe location 1440 such as a parking area may be marked with orange or purple signs or markings on the drivable area, etc.

The machine learning module 1316 may be part of the planning module 404 or another component of the AV 1304. The machine learning module 1316 builds a model from training data 1516 that contains the inputs (features 1512 or sensor data 1528) and the desired output vector 1524 (presence of the emergency vehicle 1324, a type of the emergency vehicle 1324, etc.). The machine learning module 1316 may also access a list of emergency operations 1520 that correspond to a type of the AV 1304. In one embodiment, the planning module transmits features 1512 as input to the machine learning module 1316. The machine learning module 1316 is trained to receive one or more features and generate a score (e.g., output vector 1524) indicative of a probability that the one or more features correspond to the emergency vehicle 1324. Responsive to the score exceeding a threshold value, the communications device 140 transmits, to the emergency vehicle 1324, a spatiotemporal location and identity of the AV 1304 or an operating speed of the AV 1304. The AV 1304 may thus establish a communications link with the emergency vehicle 1324.

In one embodiment, the machine learning module 1316 is used to determine whether the emergency vehicle 1324 is operating in the emergency mode. For example, the machine learning module 1316 uses the features 1512 to determine whether the emergency vehicle 1324 is simply driving on the road silently or is indeed providing emergency assistance.

Machine learning techniques are used to train the machine learning module 1316, that when applied to the feature vector 1512, outputs indications of whether the feature vector 1512 has an associated property or properties. For example, when applied to features of received sensor data 1528, the machine learning module 1316 estimates whether the features correspond to an emergency vehicle 1324, what type of emergency vehicle it is, or whether the emergency vehicle 1324 is operating in an emergency mode (output vector 1524). As part of the training of the machine learning module 1316, a training set of features and training data 1516 is formed by identifying a positive training set of features that have been determined to have the property in question (e.g., presence of the emergency vehicle 1324), and, in some embodiments, forms a negative training set of features that lack the property in question.

In an embodiment, the machine learning module 1316 receives a plurality of training sets (e.g., training data 1516), wherein each training set includes one or more labeled features. The machine learning module 1316 is trained, using the one or more labeled features, to generate a score indicative of a probability that the one or more labeled features correspond to an emergency vehicle.

In an embodiment, supervised machine learning is used to train the machine learning module 1316 with features of the positive training set and the negative training set serving as the inputs. In other embodiments, different machine learning techniques, such as deep learning, neural networks, linear support vector machine (linear SVM), boosting for other algorithms (e.g., AdaBoost), logistic regression, naive Bayes, memory-based learning, random forests, bagged trees, decision trees, boosted trees, or boosted stumps, may be used.

In some example embodiments, a validation set is formed of additional features, other than those in the training data, which have already been determined to have or to lack the property in question. The trained machine learning module 1316 is applied to the features of the validation set to quantify the accuracy of the machine learning module 1316. Common metrics applied in accuracy measurement include: Precision = TP / (TP + FP) and Recall = TP / (TP + FN), where Precision is how many the machine learning module 1316 correctly predicted (TP or true positives) out of the total it predicted (TP + FP or false positives), and Recall is how many the machine learning module 1316 correctly predicted (TP) out of the total number of features that did have the property in question (TP + FN or false negatives). The F score (F-score = 2 × PR / (P + R)) unifies Precision and Recall into a single measure. In one embodiment, the machine learning module 1316 is iteratively re-trained until the occurrence of a stopping condition, such as an accuracy measurement indication that the machine learning module 1316 is sufficiently accurate, or a number of training rounds have taken place.

### Process for Operation in an Emergency

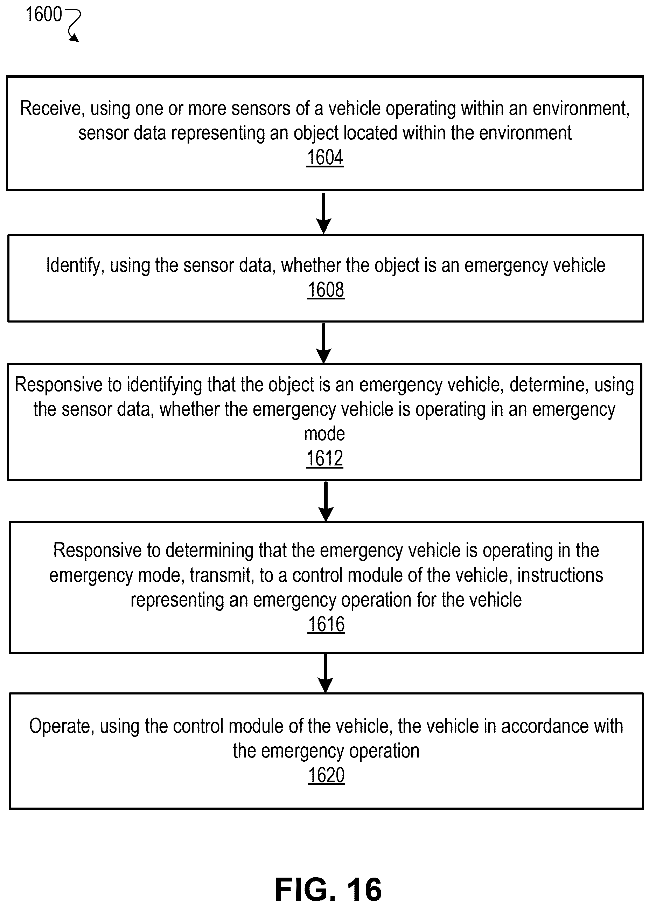

FIG. 16 illustrates a process 1600 for operation of the AV 1304 in the event of an emergency, in accordance with one or more embodiments. In one embodiment, the process of FIG. 16 is performed by the AV 1304. Other entities, for example, one or more components of the AV 1304 (planning module 404) perform some or all of the steps of the process 1600 in other embodiments. Likewise, embodiments may include different and/or additional steps, or perform the steps in different orders.

The AV 1304 receives 1604, using one or more sensors 1312, sensor data representing an object located within the environment 1300. The sensor data may be 2D or 3D audiovisual data. The object is to be classified as an emergency vehicle.

The AV 1304 identifies 1608, using the sensor data, whether the object is an emergency vehicle 1324. The AV 1304 may use the machine learning techniques described above, pattern matching, or analysis of RF or high-frequency audio codes to make the determination.

Responsive to identifying that the object is the emergency vehicle 1304, the AV 1304 determines 1612, using the sensor data, whether the emergency vehicle 1324 is operating in an emergency mode. The AV 1304 may make the determination by analyzing whether lights of the emergency vehicle 1304 are flashing or a siren of the emergency vehicle 1304 is sounding, or by analyzing a message from the emergency vehicle 1304.

Responsive to determining that the emergency vehicle 1324 is operating in the emergency mode, the AV 1304 transmits 1616, to a control module 406, instructions representing an emergency operation for the AV 1304. The instructions may instruct the AV 1304 to pull over, stop, continue driving at a certain speed, or transmit a message to the emergency vehicle 1324 or server 136.

The AV 1304 operates 1620, using the control module 406, the AV 1304 in accordance with the emergency operation. The sensors 1312 of the AV 1304 thus capture sensor data representing a structure of an object and transform the sensor data into physical operations for the AV 1304. The physical operations increase lateral clearance for the emergency vehicle 1324 to attend to an emergency. This reduces the time for maneuvering by the AV 1304 and the emergency vehicle 1324, and reduces the response time of the emergency vehicle 1324.

### Process for Operation in an Emergency

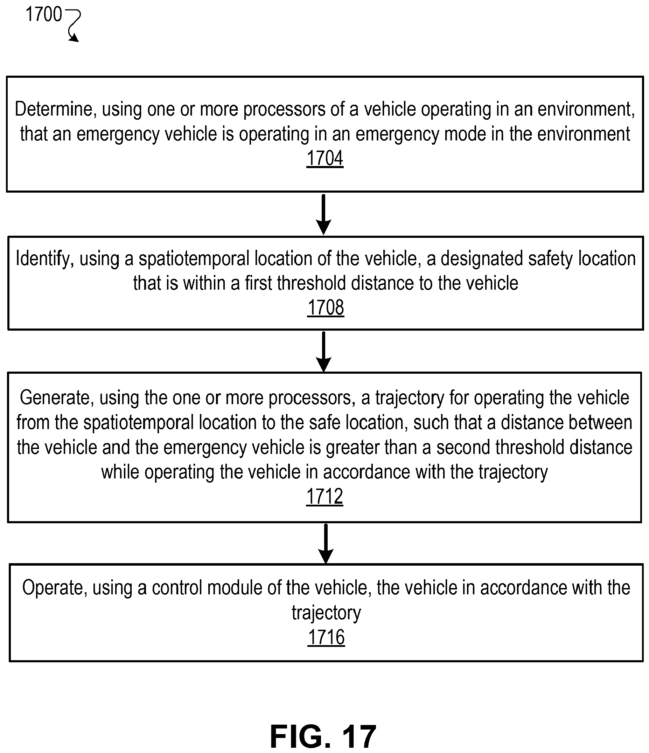

FIG. 17 illustrates a process 1700 for operation of the AV 1304 in the event of an emergency, in accordance with one or more embodiments. In one embodiment, the process of FIG. 17 is performed by the AV 1304. Other entities, for example, one or more components of the AV 1304 perform some or all of the steps of the process 1700 in other embodiments. Likewise, embodiments may include different and/or additional steps, or perform the steps in different orders.

The AV 1304 determines 1704 that an emergency vehicle 1324 is operating in an emergency mode in the environment 1300. The AV 1304 may make the determination by analyzing indicatives of emergency, e.g., whether lights of the emergency vehicle 1304 are flashing or a siren of the emergency vehicle 1304 is sounding, or by analyzing a message from the emergency vehicle 1304.

The AV 1304 identifies 1708, using a spatiotemporal location of the AV 1304, a safe location 1332 that is within a threshold distance to the AV 1304. The AV 1304 may perform lookup in a map, query the emergency vehicle 1324 or server 136, or use its sensors 1312 to identify the safe location 1332.

The AV 1304 generates 1712 a trajectory 1416 for operating the AV 1304 from the spatiotemporal location to the safe location 1332. The AV 1304 maintains a distance from the emergency vehicle 1324 greater than a threshold value while operating the AV 1304 in accordance with the trajectory 1416. The AV 1304 thus drives to the safe location 1332 while maintaining a minimum lateral clearance from the emergency vehicle 1324.

The AV 1304 operates 1716 in accordance with the trajectory 1416. The autonomous operation of the AV 1304 is thus overridden and the AV 1304 is placed in an emergency operation mode. The time to maneuver for the AV 1304 is reduced. Safety of the AV 1304, the emergency vehicle 1324, and other vehicles 1328 on the road is increased.

### Process for Operation in an Emergency

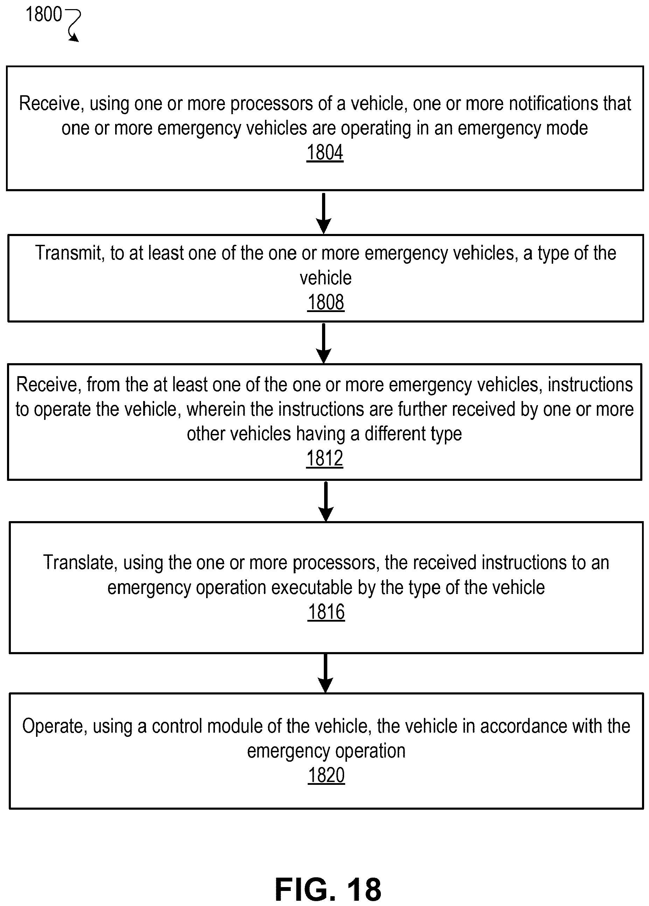

FIG. 18 illustrates a process 1800 for operation of the AV 1304 in the event of an emergency, in accordance with one or more embodiments. In one embodiment, the process of FIG. 18 is performed by the AV 1304. Other entities, for example, one or more components of the AV 1308 perform some or all of the steps of the process 1800 in other embodiments. Likewise, embodiments may include different and/or additional steps, or perform the steps in different orders.

The AV 1304 receives 1804 one or more notifications that one or more emergency vehicles 1324 are operating in an emergency mode. The notifications may be RF signals, flashing lights, sirens, or electronic messages.

The AV 1304 transmits 1808, to at least one emergency vehicle 1324, a type of the AV 1304. Thus the AV 1304 identifies itself to the emergency vehicle 1324.

The AV 1304 receives 1812, from the at least one emergency vehicle 1324, instructions to operate the AV 1304. The instructions are further received by one or more other vehicles 1328 having a different type. For example, the make and model of the vehicles 1328 may be different or the computer system and drivetrain may be different.

The AV 1304 translates 1816 the received instructions to an emergency operation executable by the type of the AV 1304. For example, the AV 1304 may translate the instructions or code written in a high-level language to a lower-level language, such as object or machine code. The AV 1304 may thus translate the source instructions to create an executable program for the AV 1304.

The AV 1304 operates 1820, using a control module 406, the AV 1304 in accordance with the emergency operation. The quality of communication between the emergency vehicles 1324, the AV 1304, and the other vehicles 1328 is increased, while the communication time is reduced. The fuel spent while idling, by other vehicles 1324, is reduced, such that traffic congestion is avoided.

### Process for Operation in an Emergency

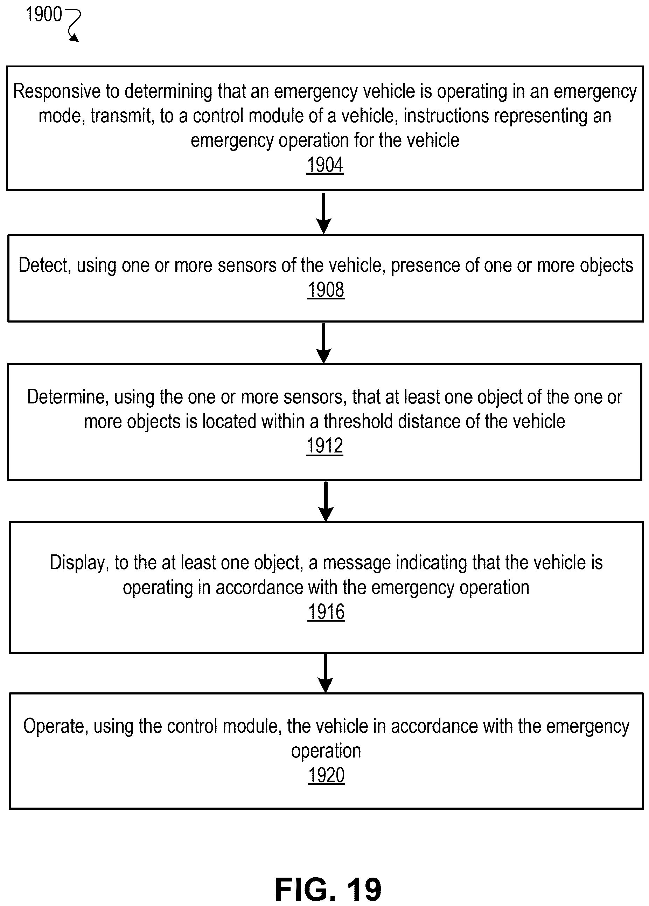

FIG. 19 illustrates a process 1900 for operation of the AV 1304 in the event of an emergency, in accordance with one or more embodiments. In one embodiment, the process of FIG. 19 is performed by the AV 1304. Other entities, for example, one or more components of the AV 1308 perform some or all of the steps of the process 1900 in other embodiments. Likewise, embodiments may include different and/or additional steps, or perform the steps in different orders.

Responsive to determining that an emergency vehicle 1324 is operating in an emergency mode, the AV 1304 transmits 1904, to a control module 406 of the AV 1304, instructions representing an emergency operation for the AV 1304. For example, the instructions may instruct the AV 1304 to pull over, stop, continue driving at a certain speed, or transmit a message to the emergency vehicle 1324.

The AV 1304 detects 1908, using one or more sensors 1312, presence of one or more objects 1008. The AV 1304 may use machine vision techniques, audio recognition, pattern matching, or machine learning to make the detection 1908. The objects 1008 may be other vehicles (e.g., vehicles 1328).

AV 1304 determines 1912, using the one or more sensors 1312, that at least one object 1008 is located within a threshold distance of the AV 1304. The AV 1304 may use time-of-flight methods such as LiDAR to make the determination.

The AV 1304 displays 1916, to the object 1008, a message indicating that the AV 1304 is operating in accordance with the emergency operation. The AV 1304 may display the message on a screen, project the message on a window of the AV 1304, or transmit the message to an electronic device.

The AV 1304 operates 1920 in accordance with the emergency operation. The embodiments disclosed herein reduce the need for communication between the emergency vehicle 1324 and the other vehicles 1328. By instructing the other vehicles 1328 on how to operate, the AV 1304 speeds up the time to disperse and increases safety in the emergency mode.

### Process for Operation in an Emergency

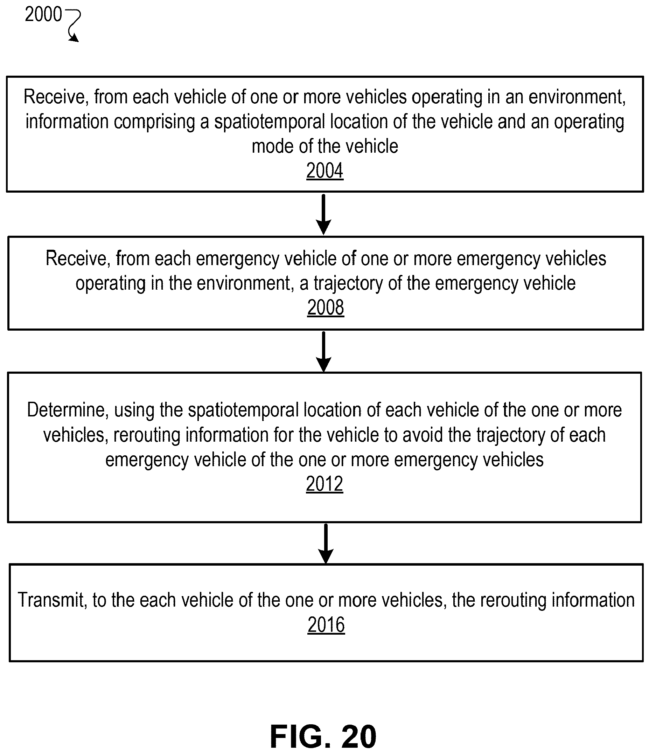

FIG. 20 illustrates a process 2000 for operation of vehicles in the event of an emergency, in accordance with one or more embodiments. In one embodiment, the process of FIG. 20 is performed by the data platform 1308. Other entities, for example, one or more components of the AV 1304 perform some or all of the steps of the process 2000 in other embodiments. Likewise, embodiments may include different and/or additional steps, or perform the steps in different orders.

The data platform 1308 receives 2004, from one or more vehicles operating in an environment 1300, information including a spatiotemporal location of the vehicles and operating modes of the vehicles. The operating modes denote which vehicles are operating in manual or autonomous mode. The vehicles may transmit the information to the data platform 1308 or the data platform 1308 may obtain the information from cameras, GNSS devices, or sensors.

The data platform 1308 receives 2008, from one or more emergency vehicles 1324 operating in the environment 1300, a trajectory of the emergency vehicles 1324. The emergency vehicles 1324 transmit their trajectories to the data platform 1308 or the data platform 1308 may obtain the trajectories from traffic cameras or sensors.

The data platform 1308 determines 2012, using the spatiotemporal location of each vehicle, rerouting information for the vehicle to avoid the trajectory of each emergency vehicle 1324. The data platform 1308 thus engages in real time communication with AVs and the emergency vehicles 1324.

The data platform 1308 transmits 2016, to the each vehicle, the rerouting information. The disclosed embodiments reduce traffic congestion and damage to the road surface by efficiently routing the AV 1304, other vehicles 1328, and emergency vehicles 1324 on a global basis. By avoiding local congestion hotspots, fuel consumption by vehicles is reduced.

### Process for Operation in an Emergency

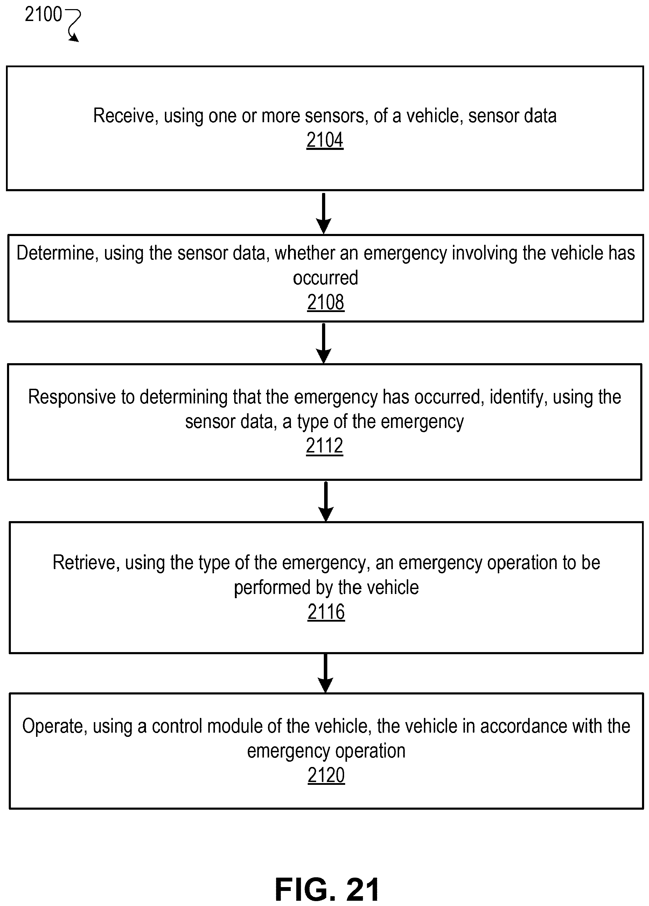

FIG. 21 illustrates a process 2100 for operation of an AV 1304 in the event of an emergency, in accordance with one or more embodiments. In one embodiment, the process of FIG. 21 is performed by the AV 1304. Other entities, for example, one or more components of the AV 1304 perform some or all of the steps of the process 2100 in other embodiments. Likewise, embodiments may include different and/or additional steps, or perform the steps in different orders.

The AV 1304 receives 2104, using one or more sensors 1312, sensor data. For example, the sensor data may represent mechanical shock data from an IMU or contact sensors, or visual data from cameras.

The AV 1304 determines 2108, using the sensor data, whether an emergency involving the AV 1304 has occurred. For example, the AV 1304 determines whether it has collided with an object 1008 or the AV 1304 is being pulled over for a traffic violation.

Responsive to determining that the emergency has occurred, the AV 1304 identifies 2112, using the sensor data, a type of the emergency, e.g., a crash or traffic violation.

The AV 1304 retrieves 2116, using the type of the emergency, an emergency operation to be performed by the AV 1304. For example, the AV 1304 may unlock a door, authenticate a law enforcement officer, transmit a message to the server 136, or display a message on a display device.

The AV 1304 operates 2120 in accordance with the emergency operation. The embodiments reduce the time taken by an emergency vehicle 1324 to respond to an emergency in which the AV 1304 is involved. Data transfer between the AV 1304, the server 136, and the emergency vehicle 1324 is minimized.

### Additional Embodiments

In one embodiment, one or more sensors of a vehicle operating within an environment receive sensor data representing an object located within the environment. Using the sensor data, it is determined whether the object is an emergency vehicle. Responsive to identifying that the object is an emergency vehicle, using the sensor data it is determined whether the emergency vehicle is operating in an emergency mode. Responsive to determining that the emergency vehicle is operating in the emergency mode, instructions representing an emergency operation for the vehicle are transmitted to a control module of the vehicle. Using the control module, the vehicle is operated in accordance with the emergency operation.

In one embodiment, the sensor data includes an image of a structural feature of the object.

In one embodiment, the sensor data includes an image of a marking on the object.

In one embodiment, determining whether the emergency vehicle is operating in the emergency mode includes detecting, using the sensor data, whether lights of the emergency vehicle are flashing.

In one embodiment, the emergency operation for the vehicle includes adjusting a trajectory of the vehicle.

In one embodiment, the emergency operation for the vehicle includes navigating to a safe location.

In one embodiment, the sensor data includes a radio-frequency (RF) signal from the emergency vehicle. The RF signal is indicative of a type of the emergency vehicle.

In one embodiment, the sensor data includes high-frequency sounds emitted by the emergency vehicle.

In one embodiment, at least one of a spatiotemporal location of the vehicle, the emergency operation for the vehicle, the type of the emergency vehicle, an operating speed of the vehicle, or information representing overriding of autonomous operation of the vehicle is transmitted to a server.

In one embodiment, a feature vector is extracted from the sensor data. The feature vector includes at least one feature representing the emergency mode.

In one embodiment, the feature vector is sent as input to a machine learning module. The machine learning module is trained to receive one or more features and generate a score indicative of a probability that the one or more features correspond to an emergency vehicle.

In one embodiment, responsive to the score exceeding a threshold value, the spatiotemporal location of the vehicle or an operating speed of the vehicle is transmitted to the emergency vehicle.

In one embodiment, using the machine learning module, it is determined whether the emergency vehicle is operating in the emergency mode.

In one embodiment, the machine learning module is further trained to receive the one or more features and determine a type of the emergency vehicle.

In one embodiment, the one or more features include letters or numbers on a license plate of the emergency vehicle.

In one embodiment, training sets are received. Each training set includes one or more labeled features. Using the one or more labeled features, the machine learning module is trained to generate a score indicative of a probability that the one or more labeled features correspond to an emergency vehicle.

In one embodiment, the operating of the vehicle includes terminating, using a control module of the vehicle, navigation of the vehicle in accordance with a previously determined trajectory, responsive to determining that the type of the emergency vehicle is an ambulance.

In one embodiment, the operating of the vehicle includes navigating, using the control module, the vehicle to a side of a road on which the vehicle is operating, responsive to determining that the type of the emergency vehicle is an ambulance.

In one embodiment, a feature of the feature vector includes a code embedded within the high-frequency sounds. The code represents the type of the emergency vehicle.

In one embodiment, using the one or more sensors, sensor data is generated including a feature of the environment.

In one embodiment, using the sensor data, the feature is mapped to a drivable area within a map of the environment.

In one embodiment, using the feature, semantic data corresponding to the drivable area is extracted.

In one embodiment, using the semantic data, it is determined whether the vehicle may navigate to the drivable area in the event of an emergency. Using the semantic data, the drivable area is annotated within the map.

In one embodiment, the drivable area is a breakdown lane.

In one embodiment, the feature represents a sign indicating a rest area.

In one embodiment, instructions are embedded in the map to navigate to the drivable area in the event of an emergency.

In one embodiment, the embedded instructions include instructions to pull over to a side of a road on which the vehicle is operating.

In one embodiment, the embedded instructions include instructions to stop the vehicle within the drivable area.

In one embodiment, the embedded instructions include instructions to reduce an operating speed of the vehicle until the vehicle reaches the drivable area.

In one embodiment, the embedded instructions include instructions to adjust a trajectory of the vehicle towards the drivable area.

In one embodiment, the feature represents a sign indicating a spatiotemporal location of the environment for emergency vehicles to enter a roadway.

In one embodiment, the embedded instructions include instructions to transmit a message to an emergency vehicle requesting an emergency command and navigate the vehicle in accordance with the emergency command.

In one embodiment, the mapping of the feature to the drivable area includes extracting, using the sensor data, a polygon including a plurality of geometric blocks. Each geometric block corresponds to a drivable segment of the drivable area.

In one embodiment, the multiple geometric blocks are superimposed onto the sensor data. A union of the superimposed geometric blocks is generated.

In one embodiment, one or more processors of a vehicle operating in an environment determine that an emergency vehicle is operating in an emergency mode in the environment. Using a spatiotemporal location of the vehicle, a safe location is identified that is within a first threshold distance to the vehicle. Using the one or more processors, a trajectory is generated for operating the vehicle from the spatiotemporal location to the safe location, such that a distance between the vehicle and the emergency vehicle is greater than a second threshold distance while operating the vehicle in accordance with the trajectory. A control module of the vehicle operates the vehicle in accordance with the trajectory.

In one embodiment, using the one or more processors, it is determined that one or more other vehicles are located between the vehicle and the emergency vehicle.

In one embodiment, operating of the vehicle includes reducing a lateral clearance between the vehicle and the one or more other vehicles.

In one embodiment, the identifying of the safe location includes scanning, using the one or more processors, a map of the environment.

In one embodiment, the identifying of the safe location further includes detecting an icon within the map, wherein the icon corresponds to the safe location.

In one embodiment, using one or more sensors of the vehicle, a vacant parking spot for the vehicle within the safe location is identified.

In one embodiment, using the one or more processors, a graphical representation of the environment is adjusted to increase one or more weights of one or more travel segments in the graphical representation. The one or more travel segments are within a third threshold distance to the emergency vehicle.

In one embodiment, the generating of the trajectory includes minimizing, using the adjusted graphical representation, an aggregate weight of a plurality of travel segments. The trajectory includes the plurality of travel segments.

In one embodiment, the identifying of the safe location includes transmitting, to a server, the spatiotemporal location of the vehicle. An address of the safe location is received from the server.

In one embodiment, using the one or more sensors, a spatiotemporal location of the emergency vehicle is determined.

In one embodiment, the spatiotemporal location of the emergency vehicle is transmitted to the server. The server is enabled to transmit rerouting information to other vehicles to avoid the emergency vehicle.

In one embodiment, the spatiotemporal location of the emergency vehicle is transmitted to the one or more other vehicles. The one or more other vehicles are enabled to generate one or more trajectories to the safe location.

In one embodiment, a list of safe locations is received from the emergency vehicle, responsive to transmitting, using the one or more processors, a request to the emergency vehicle. Using the received list of safe locations, the safe location is identified.

In one embodiment, the generating of the trajectory includes receiving, from the emergency vehicle, a plurality of travel segments, responsive to transmitting, using the one or more processors, a request to the emergency vehicle. Using the graphical representation of the environment, the trajectory is determined. The trajectory includes at least one of the received travel segments.

In one embodiment, using the one or more sensors, it is determined that the emergency vehicle has completed the operating in the emergency mode. Using the one or more processors, a second trajectory is generated from the safe location to a destination location.

In one embodiment, using the one or more sensors, is it detected that the emergency vehicle has stopped flashing lights of the emergency vehicle.

In one embodiment, instructions to resume autonomous operation are received from the emergency vehicle.

In one embodiment, using the one or more sensors, it is detected that the emergency vehicle has stopped sounding a siren.

In one embodiment, one or more processors of a vehicle receive one or more notifications that one or more emergency vehicles are operating in an emergency mode. A type of the vehicle is transmitted to at least one of the one or more emergency vehicles. From the at least one of the one or more emergency vehicles, instructions are received to operate the vehicle. The instructions are further received by one or more other vehicles having a different type. The one or more processors translate the received instructions to an emergency operation executable by the type of the vehicle. A control module of the vehicle operates the vehicle in accordance with the emergency operation.

In one embodiment, the received instructions are further translated, by the one or more other vehicles, to one or more emergency operations executable by the one or more other vehicles.

In one embodiment, it is determined that a probability of a collision of the vehicle with at least one of the one or more other vehicles is greater than zero. The control module stops the vehicle.

In one embodiment, using the one or more processors, a trajectory of the emergency vehicle is determined.

In one embodiment, the operating of the vehicle includes navigating, using the one or more processors, the vehicle to avoid the determined trajectory of the emergency vehicle.

In one embodiment, a message is received from another vehicle of the one or more other vehicles that the other vehicle is navigating to a safe location.

In one embodiment, using the control module, the other vehicle is followed to the safe location by the vehicle.

In one embodiment, using sensor data obtained from one or more sensor of the vehicle, one or more spatiotemporal locations of the one or more other vehicles are determined.

In one embodiment, using the control module, the vehicle is operated to avoid a collision of the vehicle with the one or more other vehicles.

In one embodiment, a spatiotemporal location of the vehicle is transmitted to a server. A spatiotemporal location of one of the one or more other vehicles that is within a threshold distance to the vehicle is received from the server.

In one embodiment, using the sensors, a change in a frequency of soundwaves from the emergency vehicle is detected.

In one embodiment, using the change in the frequency of the soundwaves, a speed of the emergency vehicle relative to the vehicle is determined.

In one embodiment, using the spatiotemporal location of the emergency vehicle and the speed of the emergency vehicle relative to the vehicle, a trajectory is determined for the vehicle to avoid the emergency vehicle.

In one embodiment, using multiple microphones of the vehicle, multiple intensities of the sound waves are determined.

In one embodiment, using the sensors, a directional orientation of the emergency vehicle is determined, wherein the sensors include multiple directional microphones.

In one embodiment, using the sensors, a change in a wavelength of the soundwaves is determined.

In one embodiment, each microphone is located on a distinct side of the vehicle.

In one embodiment, a data platform includes one or more processors configured to receive, from each vehicle of one or more vehicles operating in an environment, information including a spatiotemporal location of the vehicle and an operating mode of the vehicle. From each emergency vehicle of one or more emergency vehicles operating in the environment, a trajectory of the emergency vehicle is received. Using the spatiotemporal location of each vehicle of the one or more vehicles, rerouting information is determined for the vehicle to avoid the trajectory of each emergency vehicle of the one or more emergency vehicles. The rerouting information is transmitted to each vehicle of the one or more vehicles.

In one embodiment, one or more databases are communicatively coupled to the one or more processors. The processors are further configured to store, on the one or more databases, information including the spatiotemporal location of the each vehicle of the one or more vehicles and the operating mode of each vehicle of the one or more vehicles.

In one embodiment, the operating mode is manual or autonomous.

In one embodiment, the one or more processors are further configured to receive, from one or more traffic cameras, one or more images representing traffic within the environment.

In one embodiment, determining of the rerouting information includes determining a trajectory for the vehicle to avoid the traffic.

In one embodiment, the one or more processors are further configured to determine, using the one or more images, second rerouting information for the each emergency vehicle of the one or more emergency vehicles to avoid the traffic.

In one embodiment, the one or more processors are further configured to transmit, to the each emergency vehicle of the one or more emergency vehicles, the second rerouting information.

In one embodiment, the one or more processors are further configured to update, using the one or more images representing the traffic, a weighted graphical representation of the environment.

In one embodiment, a weight of a travel segment of the weighted graphical representation denotes a number of the vehicles operating on the travel segment.

In one embodiment, a weight of a travel segment further denotes a number of predicted collisions of a vehicle with objects when traveling along the travel segment.

In one embodiment, a weight of a travel segment further denotes a number of predicted stops for a vehicle when traveling along the travel segment.

In one embodiment, a weight of a travel segment further denotes a predicted lateral clearance between a vehicle and an object when traveling along the travel segment.

In one embodiment, a weight of a travel segment further denotes an amount of road surface damage of the travel segment.

In one embodiment, a weight of a travel segment of the weighted graphical representation denotes a number of the one or more emergency vehicles operating on the travel segment.

In one embodiment, the one or more processors are further configured to transmit, to a controller of a traffic signal, the rerouting information. The controller is enabled to turn the traffic signal green to allow a vehicle of the one or more vehicles to operate in accordance with the rerouting information.

In one embodiment, the one or more processors are further configured to stop, using the control module, the vehicle, responsive to determining that a type of an emergency vehicle is a law enforcement vehicle,.

In one embodiment, the one or more processors are further configured to unlock a door of the vehicle, responsive to determining that the type of the emergency vehicle is a law enforcement vehicle.

In one embodiment, using one or more sensors, of a vehicle, sensor data is received. Using the sensor data, it is determined whether an emergency involving the vehicle has occurred. Responsive to determining that the emergency has occurred, using the sensor data, a type of the emergency is identified. Using the type of the emergency, an emergency operation to be performed by the vehicle is retrieved. A control module of the vehicle operates the vehicle in accordance with the emergency operation.

In one embodiment, the emergency includes a collision of the vehicle with an object.

In one embodiment, the emergency includes the vehicle being pulled over by a law enforcement vehicle.

In one embodiment, a request for the emergency operation is transmitted to a server. The request includes the type of the emergency.

In one embodiment, it is detected that the emergency has terminated. A door of the AV is locked.

In one embodiment, it is detected that the emergency has terminated. Authentication of emergency personnel is terminated.

In one embodiment, responsive to the determining that the emergency has occurred, a request for assistance is transmitted to an emergency vehicle.

In one embodiment, the request for assistance includes a spatiotemporal location of the vehicle.

In one embodiment, the one or more sensors include an inertial measurement unit (IMU). The sensor data includes a measurement of mechanical shock experienced by the vehicle.

In one embodiment, the one or more sensors include a contact sensor embedded on a bumper or a fender of the vehicle.

In one embodiment, the one or more sensors include a body control module. The sensor data indicates that an airbag of the vehicle has deployed.

In one embodiment, responsive to the determining that the emergency involving the vehicle has occurred, an immobilizer unit of the vehicle terminates operation of an engine of the vehicle.

In one embodiment, the determining that the emergency has occurred includes identifying, using the sensor data, a difference between a speed of the vehicle and a rotational speed of a wheel of the vehicle.

In one embodiment, the determining that the emergency has occurred includes identifying, using the sensor data, a change in a speed of the vehicle within a time period. The change in the speed exceeds a threshold speed and the time period is below a threshold time period.

In one embodiment, the determining that the emergency has occurred includes determining, using the sensor data, that a number of the one or more sensors have failed. The number is above a threshold number.

In one embodiment, determining that the emergency has occurred includes detecting, using the one or more sensors, that a window or a windshield of the vehicle has broken.

In one embodiment, determining that the emergency has occurred includes receiving, using an input device of the vehicle, a message from a passenger indicating the emergency.

In one embodiment, the one or more sensors include a microphone. Determining that the emergency has occurred includes detecting, using sounds captured by the microphone, a collision of the vehicle.

In one embodiment, the one or more sensors include a camera. Determining that the emergency has occurred includes detecting, using images captured by the camera, a collision of the vehicle.

In one embodiment, the one or more sensors include a camera. Determining that the emergency has occurred includes detecting, using images captured by the camera, a law enforcement vehicle that is signaling to the vehicle to pull over.

In one embodiment, using an input device of the vehicle, an identity of a law enforcement officer who is outside the vehicle is authenticated.

In one embodiment, responsive to the authenticating of the identity of the law enforcement officer, the one or more processors unlock a door of the vehicle.

In one embodiment, responsive to the determining that the emergency has occurred, it is determined that a portion of the vehicle is functional.

In one embodiment, responsive to the determining that the emergency has occurred, a door of the vehicle is unlocked. On a display device of the vehicle, an instruction is displayed.

In the foregoing description, embodiments of the invention have been described with reference to numerous specific details that may vary from implementation to implementation. The description and drawings are, accordingly, to be regarded in an illustrative rather than a restrictive sense. The sole and exclusive indicator of the scope of the invention, and what is intended by the applicants to be the scope of the invention, is the literal and equivalent scope of the set of claims that issue from this application, in the specific form in which such claims issue, including any subsequent correction. Any definitions expressly set forth herein for terms contained in such claims shall govern the meaning of such terms as used in the claims. In addition, when we use the term "further including," in the foregoing description or following claims, what follows this phrase can be an additional step or entity, or a sub-step/sub-entity of a previously-recited step or entity.

### Embodiments

Although the present invention is defined in the attached claims, it should be understood that the present invention can also (alternatively) be defined in accordance with the following embodiments:
1. A method comprising:
   responsive to determining that an emergency vehicle is operating in an emergency mode, transmitting, to a control module of a vehicle, instructions representing an emergency operation for the vehicle;
   detecting, using one or more sensors of the vehicle, presence of one or more objects;
   determining, using the one or more sensors, that at least one object of the one or more objects is located within a threshold distance of the vehicle;
   displaying, to the at least one object, a message indicating that the vehicle is operating in accordance with the emergency operation; and
   operating, using the control module of the vehicle, the vehicle in accordance with the emergency operation.
2. The method of embodiment 1, wherein the at least one object is another vehicle, and wherein the message comprises an instruction for the other vehicle to follow the vehicle.
3. The method of embodiment 1 or 2, wherein the at least one object is a pedestrian.
4. The method of any one of embodiments 1-3, wherein the emergency operation comprises at least one of pulling over to a side of a road on which the vehicle is operating, stopping the vehicle, reducing an operating speed of the vehicle, or adjusting a trajectory of the vehicle.
5. The method of any one of embodiments 1-4, wherein the message comprises an address of a safe location that the vehicle is navigating to.
6. The method of any one of embodiments 1-5, wherein the displaying of the message comprises broadcasting, using one or more loudspeakers of the vehicle, audible information.
7. The method of any one of embodiments 1-6, wherein the displaying of the message comprises transmitting, to a display device of the vehicle, text or graphical information.
8. The method of any one of embodiments 1-7, wherein the displaying of the message comprises broadcasting, using a beacon of the vehicle, the message.
9. The method of any one of embodiments 1-8, further comprising transmitting, to a server, the message, such that the server is enabled to transmit rerouting information to one or more other vehicles.
10. The method of any one of embodiments 1-9, further comprising transmitting, to a controller of a traffic signal, the message, such that the controller is enabled to turn the traffic signal green to allow the vehicle to operate in accordance with the emergency operation.
11. The method of any one of embodiments 1-10, wherein the semantic data comprises a logical driving constraint associated with navigating the vehicle to the drivable area.
12. The method of any one of embodiments 1-11, wherein the embedded instructions further comprise instructions to determine, using the sensor data, a spatial location of the vehicle relative to a boundary of the drivable area.
13. The method of any one of embodiments 1-12, wherein the sensors comprise a global navigation satellite system (GNSS) sensor or an inertial measurement unit (IMU).
14. The method of any one of embodiments 1-13, wherein the feature comprises a color of an object within the environment or a marking on the drivable area.
15. The method of any one of embodiments 1-14, further comprising:
   receiving, from the emergency vehicle, instructions representing the emergency operation for the vehicle, wherein the vehicle is operating autonomously; and
   overriding, using the one or more processors, the autonomous operation of the vehicle.
16. The method of any one of embodiments 1-15, further comprising:
   determining, using the sensors that the emergency vehicle has terminated operating in the emergency mode; and
   resuming, using the control module, the autonomous operation.
17. The method of any one of embodiments 1-16, further comprising broadcasting, using a beacon of the vehicle, information indicating that the vehicle is resuming the autonomous operation.
18. The method of any one of embodiments 1-17, wherein the displaying of the message comprises presenting the message on at least one of a window of the vehicle, a windshield of the vehicle, a door of the vehicle, or a hood of the vehicle.
19. A non-transitory computer readable storage medium storing instructions executable by one or more computer processors, the instructions when executed by the one or more computer processors cause the one or more computer processors to:
   responsive to determining that an emergency vehicle is operating in an emergency mode, transmit, to a control module of a vehicle, a first message representing an emergency operation for the vehicle;
   detect, using one or more sensors of the vehicle, presence of one or more objects;
   determine, using the one or more sensors, that at least one object of the one or more objects is located within a threshold distance of the vehicle;
   display, to the at least one object, a second message indicating that the vehicle is operating in accordance with the emergency operation; and
   operate, using the control module of the vehicle, the vehicle in accordance with the emergency operation.
20. A vehicle comprising:
   one or more computer processors; and
   a non-transitory computer readable storage medium storing instructions executable by one or more computer processors, the instructions when executed by the one or more computer processors cause the one or more computer processors to:
      responsive to determining that an emergency vehicle is operating in an emergency mode, transmit, to a control module of a vehicle, a first message representing an emergency operation for the vehicle;
      detect, using one or more sensors of the vehicle, presence of one or more objects;
      determine, using the one or more sensors, that at least one object of the one or more objects is located within a threshold distance of the vehicle;
      display, to the at least one object, a second message indicating that the vehicle is operating in accordance with the emergency operation; and
      operate, using the control module of the vehicle, the vehicle in accordance with the emergency operation.

## Claims

1. A method comprising:
responsive to determining that an emergency vehicle is operating in an emergency mode, transmitting, to a control module of a vehicle, instructions representing an emergency operation for the vehicle;
detecting, using one or more sensors of the vehicle, presence of one or more objects;
determining, using the one or more sensors, that at least one object of the one or more objects is located within a threshold distance of the vehicle;
displaying, to the at least one object, a message indicating that the vehicle is operating in accordance with the emergency operation; and
operating, using the control module of the vehicle, the vehicle in accordance with the emergency operation.

2. The method of claim 1, wherein:
the at least one object is another vehicle, and wherein the message comprises an instruction for the other vehicle to follow the vehicle; or
the at least one object is a pedestrian.

3. The method of any one of claims 1 or 2, wherein the emergency operation comprises at least one of pulling over to a side of a road on which the vehicle is operating, stopping the vehicle, reducing an operating speed of the vehicle, or adjusting a trajectory of the vehicle.

4. The method of any one of claims 1-3, wherein the message comprises an address of a safe location that the vehicle is navigating to.

5. The method of any one of claims 1-4, wherein the displaying of the message comprises one or more of:
broadcasting, using one or more loudspeakers of the vehicle, audible information;
transmitting, to a display device of the vehicle, text or graphical inform;
broadcasting, using a beacon of the vehicle, the message; and
presenting the message on at least one of a window of the vehicle, a windshield of the vehicle, a door of the vehicle, or a hood of the vehicle.

6. The method of any one of claims 1-5, further comprising:
transmitting, to a server, the message, such that the server is enabled to transmit rerouting information to one or more other vehicles; and/or
transmitting, to a controller of a traffic signal, the message, such that the controller is enabled to turn the traffic signal green to allow the vehicle to operate in accordance with the emergency operation.

7. The method of any one of claims 1-6, wherein the semantic data comprises a logical driving constraint associated with navigating the vehicle to the drivable area.

8. The method of any one of claims 1-7, wherein the embedded instructions further comprise instructions to determine, using the sensor data, a spatial location of the vehicle relative to a boundary of the drivable area.

9. The method of any one of claims 1-8, wherein the sensors comprise a global navigation satellite system (GNSS) sensor or an inertial measurement unit (IMU).

10. The method of any one of claims 1-9, wherein the feature comprises a color of an object within the environment or a marking on the drivable area.

11. The method of any one of claims 1-10, further comprising:
receiving, from the emergency vehicle, instructions representing the emergency operation for the vehicle, wherein the vehicle is operating autonomously; and
overriding, using the one or more processors, the autonomous operation of the vehicle.

12. The method of any one of claims 1-11, further comprising:
determining, using the sensors that the emergency vehicle has terminated operating in the emergency mode; and
resuming, using the control module, the autonomous operation.

13. The method of any one of claims 1-12, further comprising broadcasting, using a beacon of the vehicle, information indicating that the vehicle is resuming the autonomous operation.

14. A non-transitory computer readable storage medium storing instructions executable by one or more computer processors, the instructions when executed by the one or more computer processors cause the one or more computer processors to perform the method of any one of claims 1 to 13.

15. A vehicle comprising:
one or more computer processors; and
a non-transitory computer readable storage medium storing instructions executable by one or more computer processors, the instructions when executed by the one or more computer processors cause the one or more computer processors to perform the method of any one of claims 1 to 13.
